# EUROPEAN PATENT SPECIFICATION

(11) **EP 0 606 617 B1**
(45) Date of publication and mention of the grant of the patent: **23.07.1997**
(21) Application number: 93120488.7
(22) Date of filing: 18.12.1993
(51) Int. Cl.: C05F 9/02, C05F 17/00, C05F 17/02, B09B 3/00

(54) **Organic waste disposal method and organic waste disposal system**
Verfahren und Vorrichtung zur Entsorgung von organischen Abfallstoffen
Procédé et dispositif d'élimination de déchets organiques

(30) Priority: 20.07.1993 JP 179138/93; 20.07.1993 JP 179139/93; 22.12.1992 JP 342466/92; 08.07.1993 JP 169085/93
(43) Date of publication of application: 20.07.1994
(73) Proprietor: SANYO ELECTRIC CO. LTD, Moriguchi-City, Osaka 570 (JP)
(72) Inventor: Morishita, Takuya, c/o Sanyo Electric Co., Ltd., Moriguchi-City, Osaka 570 (JP); Yasuda, Hideo, c/o Sanyo Electric Co., Ltd., Moriguchi-City, Osaka 570 (JP); Morimoto, Toshiya, c/o Sanyo Electric Co., Ltd., Moriguchi-City, Osaka 570 (JP); Asada, Masahiko, c/o Sanyo Electric Co., Ltd., Moriguchi-City, Osaka 570 (JP); Fukumoto, Akihiro, c/o Sanyo Electric Co., Ltd., Moriguchi-City, Osaka 570 (JP); Aida, Kenji, c/o Sanyo Electric Co., Ltd., Moriguchi-City, Osaka 570 (JP); Sasakura, Hiroyuki, c/o Sanyo Electric Co., Ltd., Moriguchi-City, Osaka 570 (JP); Hirata, Toshi, c/o Sanyo Electric Co., Ltd., Moriguchi-City, Osaka 570 (JP); Onishi, Yoshihisa, c/o Sanyo Electric Co., Ltd., Moriguchi-City, Osaka 570 (JP); Sibuya, Yasuyuki, c/o Sanyo Electric Co., Ltd., Moriguchi-City, Osaka 570 (JP); Ioku, Katsunori, c/o Sanyo Electric Co., Ltd., Moriguchi-City, Osaka 570 (JP)
(74) Representative: Selting, Günther, Dipl.-Ing.

(56) References cited:
- EP-A- 0 341 196
- CH-A- 671 219
- DE-A- 3 743 651
- DE-U- 9 303 691
- US-A- 4 040 810

## Description

The present invention relates to an organic waste disposal method and an organic waste disposal system for the disposal of kitchen garbage consisting of organic waste (food garbage), generated in kitchens, by means of the decomposing action of the activities of aschelminthes such as philodina and diplogaster, and micro-organisms such as protozoa and bacteria.

One of the methods for disposing of kitchen garbage generated every day in the kitchens of homes and eating establishments utilizes the decomposing action of microorganisms. This method has been viewed as a promising technology because it helps reduce the volume of wastes and contributes to the reduction of processing load on the waste incineration facilities and sewage treatment plants, and is also favorable in the aspect of environment conservation.

As an organic kitchen garbage disposal apparatus, a compost vessel has long been known. It is a cylindrical vessel having a lid covering an opening on one side, and is partially embedded to an appropriate depth in the ground with another opening on the other side facing downward. After charging kitchen garbage into the vessel by opening the lid, the vessel is left to stand with the lid being closed, so that the micro-organisms reproducing in the soil decompose the kitchen garbage into compost.

However, the progress of decomposing the kitchen garbage in the compost vessel is moderate and therefore the rate of composting is slow, thus the small processing capacity limits the applicability of the compost vessel. Also the compost vessel requires the existence of soil wherein it is embedded, and a larger processing capacity requires a vessel of greater volume. It also has a problem of an odor generated in the process of decomposition leaking into the environment, which makes it unsuitable to the application in urban areas crowded with collective residential buildings. When used in an urban area, it also has a problem that the compost produced through the decomposition process is difficult to dispose of.

A method of grinding and dewatering kitchen garbage and automatically packing it in waste bags which are thereafter dumped has been proposed, for example, in JP-A-4-156959 (1992). However, this method requires the disposal of the waste bags containing the kitchen garbage, resulting in the trouble of dumping operation and a problem in view of environment conservation. Organic kitchen garbage disposal systems, wherein organic garbage is charged into a process vessel which houses a medium to cultivate micro-organisms, thereby the kitchen garbage is decomposed by the action of the micro-organisms, is proposed in JP-A-2-1291 (1990) and JP-U-2-125942 (1990). These organic kitchen garbage disposal systems, because water charged together with the kitchen garbage and water generated in the garbage decomposition process are discharged without treatment, discharged water has a high level of BOD which represents a potential threat to the environment.

US-A-4 040 810 discloses an apparatus and method for treating waste products. Fly larvae which hatch from eggs added to the waste product are used for aerating the waste product for accelerating the bioreduction and removal of moisture. The fly larvae and the bioreduced manure are then separated on a perforated screen belt by using the negative reaction of the larvae to light.

DE-A-37 43 651 describes a composting container with an inlet hopper having a chopper for chopping the material to be composted. The bottom area of the container comprises a worm culture.

Further, CH-A-671 219 discloses a composting system wherein red worms are cultured. The worm cultures are comprised within beams having water distributors, temperature sensors and humidity sensors. A filter bassin is provided for regenerating the outflowing liquid.

One object of the invention is to provide an organic waste disposal method and an organic waste disposal system which have a long lasting capability to efficiently decompose and dispose of organic waste (food garbage).

Another object of the invention is to provide an organic waste disposal method and an organic waste disposal system which are capable of decomposing and disposing of organic waste and, at the same time, purifying the waste water.

Further, another object of the invention is to provide an organic waste disposal method and an organic waste disposal system which are capable of decomposing and disposing of organic waste efficiently in a short period of time with a simple constitution.

The organic waste disposal method of the invention is defined by claim 1 and the organic waste disposal system of the invention is defined by claim 3.

The method and the system of the invention are capable of decomposing and disposing of organic waste while suppressing the breeding of vermin such as flies.

Further, the method and the system are capable of monitoring the state of the organic waste decomposition process and thereby always maintaining the proper disposal conditions.

The aschelminthes and micro-organisms are prevented from being overloaded and thereby reducing the generation of an odor and the entry of the organic waste into the discharged water.

Decomposing and disposing of kitchen garbage (organic waste) as packed in waste bags is possible.

The invention provides an organic waste disposal method and an organic waste disposal system wherein kitchen garbage (organic waste) generated in a kitchen is charged either directly or after being ground by a grinder, into a process vessel which houses a medium to cultivate aschelminthes such as philodina and diplogaster and micro-organisms such as protozoa and bacteria, wherein the medium and the charged organic waste are mixed with each other by mixing means installed in the process vessel, thereby to decompose the organic waste by means of the aschelminthes and micro-organisms, then the stale liquid is purified by means of bacteria.

In the organic waste disposal method of the invention, aschelminthes and micro-organisms digest organic waste to eradicate them, with the remnant thereof and the waste and dead bodies of the aschelminthes and micro-organisms being decomposed by bacteria. In this process of food chain, the organic waste is almost completely decomposed with virtually no part of it remaining.

In the organic waste disposal method of the invention, the process vessel is divided into a processing section wherein the mixing means is located, and a purification section wherein no mixing means is located, while organic waste is decomposed in the processing section by means of the aschelminthes and micro-organisms with the decomposition products generated therein are decomposed and purified by bacteria in the purification section, thus providing a high processing efficiency. Additional purification means containing the medium may also be installed outside the process vessel.

The purification section of the process vessel is provided with heating means for activating the bacteria and improve the decomposing and purifying capability thereof. Also the mixing means is provided with heating means for heating the medium to activate the aschelminthes and micro-organisms and improve the processing capability thereof. Further, heating means is provided to heat the space above the medium in the process vessel, thereby to eradicate vermin which breed in the process vessel.

The processing section and the purification section of the process vessel are communicated by a water passage, thereby facilitating smooth discharge of water from the processing section to the purification section. The inner surface of the process vessel is provided with a mark inscribed thereon to indicate the standard volume of medium, to enable it to easily check the volume of remaining medium. A sensor to detect the weight of the process vessel is provided to so that, based on the result of detection thereof, it is judged whether decomposition of the organic waste is proceeding satisfactorily and whether the medium needs replenishment or not. The process vessel is also provided with a water level sensor installed therein to monitor the state of water discharge. A sensor to detect the overload state of the aschelminthes and micro-organisms is also installed to inform the user of the overload state.

Breaking means is installed in the boundary region between the processing section and the purification section of the process vessel to break a solidification layer of the medium formed in the boundary region, thereby to prevent decrease in the processing capacity. A breaking operation of the breaking means is linked with the open/close operation of the lid of the process vessel and/or the mixing operation of the mixing means.

The process vessel is provided with either fixed teeth installed therein to grind organic waste between thereof and the mixing means, or grinding means installed in a stage prior to the process vessel to grind organic waste. Such an arrangement reduces the processing time in the process vessel.

Use of garbage bags made of a biodegradable material enables the kitchen garbage (organic waste) to be decomposed in the organic waste disposal system of the invention, even when the garbage is charged as contained in the bag.

The above and further objects and features of the invention will more fully be apparent from the following detailed description with accompanying drawings.

### BRIEF DESCRIPTION OF THE DRAWINGS

Fig.1 is a sectional drawing in the front view illustrative of the organic waste disposal system of a first embodiment of the invention.

Fig.2 is a cross sectional drawing illustrative of the organic waste disposal system of the first embodiment.

Fig.3 is a cross sectional drawing illustrative of the state in which a lid is opened in the first embodiment.

Fig.4 is a sectional drawing in side view with the side wall removed in the first embodiment.

Fig.5 is a perspective view of a mixer screw in the first embodiment.

Fig.6 is an enlarged sectional drawing of a key component in the first embodiment.

Fig.7 is a drawing illustrative of the top face in the first embodiment.

Fig.8 is a perspective view drawing illustrative of the state in which a lid is opened in the first embodiment.

Fig.9 is an enlarged perspective view drawing of a key component in the first embodiment.

Fig.10 is an enlarged perspective view drawing of a key component partially broken in the first embodiment.

Fig.11 is an enlarged sectional drawing of a key component in the first embodiment.

Fig.12 is a block diagram of a control system in the first embodiment.

Fig.13 is a sectional drawing in the front view illustrative of the organic waste disposal system in a second embodiment of the invention.

Fig.14 is a cross sectional drawing illustrative of the organic waste disposal system in the second embodiment.

Fig.15 is a sectional drawing in the side view with the side wall removed in the second embodiment.

Fig.16 is an enlarged sectional drawing of a key component in the second embodiment.

Fig.17 is a circuit diagram of a control system in the second embodiment.

Fig.18 is a sectional drawing in the front view illustrative of the organic waste disposal system in a third embodiment of the invention.

Fig.19 is a sectional drawing in the front view illustrative of the organic waste disposal system in a fourth embodiment of the invention.

Fig.20 is a cross sectional drawing illustrative of the organic waste disposal system in the fourth embodiment.

Fig.21 is a sectional drawing in the front view illustrative of the organic waste disposal system in a fifth embodiment of the invention.

Fig.22 is a sectional drawing in the front view illustrative of the organic waste disposal system in a sixth embodiment of the invention.

Fig.23 is a cross sectional drawing illustrative of the organic waste disposal system in the sixth embodiment.

Fig.24 is a cross sectional drawing illustrative of the organic waste disposal system in a seventh embodiment of the invention.

Fig.25 is a perspective view drawing illustrative of the state of replenishing the medium in the seventh embodiment.

Fig.26 is a plan view drawing illustrative of the charging guide in the seventh embodiment.

Fig.27 is a perspective view drawing illustrative of the state of packing in the seventh embodiment.

Fig.28 is a sectional drawing in the front view illustrative of the organic waste disposal system in an eighth embodiment of the invention.

Fig.29 is a cross sectional drawing illustrative of the organic waste disposal system in the eighth embodiment.

Fig.30 is an enlarged sectional drawing of a water level sensor in the eighth embodiment.

Fig.31 is a block diagram of the control system in the eighth embodiment.

Fig.32 is a plan view drawing illustrative of a display unit in the eighth embodiment.

Fig.33 is a graph illustrative of change in the weight of the process vessel with time in the eighth embodiment.

Fig.34 is a sectional drawing in the front view illustrative of the organic waste disposal system in the ninth embodiment of the invention.

Fig.35 is a cross sectional drawing illustrative of the organic waste disposal system in the ninth embodiment.

Fig.36 is a sectional drawing in the front view illustrative of the organic waste disposal system of a variation of the ninth embodiment.

Fig.37 is a cross sectional drawing illustrative of the variation of the ninth embodiment.

Fig.38 is a drawing explanatory of the operation of the breaking means in the variation of the ninth embodiment.

Fig.39 is a drawing explanatory of the operation of the breaking means in the variation of the ninth embodiment.

Fig.40 is a sectional drawing in the front view illustrative of the organic waste disposal system of another variation of the ninth embodiment.

Fig.41 is a cross sectional drawing illustrative of another variation of the ninth embodiment.

Fig.42 is a sectional drawing in the front view illustrative of the organic waste disposal system in a tenth embodiment of the invention.

Fig.43 is a cross sectional drawing illustrative of the organic waste disposal system in the tenth embodiment.

Fig.44 is a drawing explanatory of the operation of the breaking means linked with the opening and closing operation of the lid in the tenth embodiment.

Fig.45 is a drawing explanatory of the operation of the breaking means linked with the opening and closing operation of the lid in the tenth embodiment.

Fig.46 is a sectional drawing in the front view illustrative of the organic waste disposal system in an eleventh embodiment of the invention.

Fig.47 is a cross sectional drawing illustrative of the organic waste disposal system in the eleventh embodiment.

Fig.48 is a sectional drawing in the front view illustrative of the organic waste disposal system of a variation of the eleventh embodiment.

Fig.49 is a cross sectional drawing illustrative of the variation of the eleventh embodiment.

Fig.50(a), (b) are drawings explanatory of the operation of the breaking means in the variation of the eleventh embodiment of the invention.

Fig.51 is a sectional drawing in the front view illustrative of the organic waste disposal system in a twelfth embodiment of the invention.

Fig.52 is a cross sectional drawing illustrative of the organic waste disposal system in the twelfth embodiment.

Fig.53 is a sectional drawing in the front view illustrative of the organic waste disposal system of a variation of the twelfth embodiment.

Fig.54 is a sectional drawing in the front view illustrative of the organic waste disposal system of another variation of the twelfth embodiment.

Fig.55 is a sectional drawing in the side view illustrative of the organic waste disposal system in a thirteenth embodiment of the invention.

Fig.56 is a sectional drawing in the side view illustrative of the organic waste disposal system of a variation of the thirteenth embodiment.

Fig.57 is a sectional drawing in the side view illustrative of the organic waste disposal system of another variation of the thirteenth embodiment.

Fig.58 is a sectional drawing in the side view illustrative of the organic waste disposal system of further another variation of the thirteenth embodiment.

Fig.59 is a perspective view drawing illustrative of a bag in the state of containing kitchen garbage.

Fig.60 is a cross sectional drawing illustrative of the organic waste disposal system in a fourteenth embodiment of the invention.

### DESCRIPTION OF THE PREFERRED EMBODIMENTS

The invention will now be described in detail with reference to the drawings illustrative of the preferred embodiments.

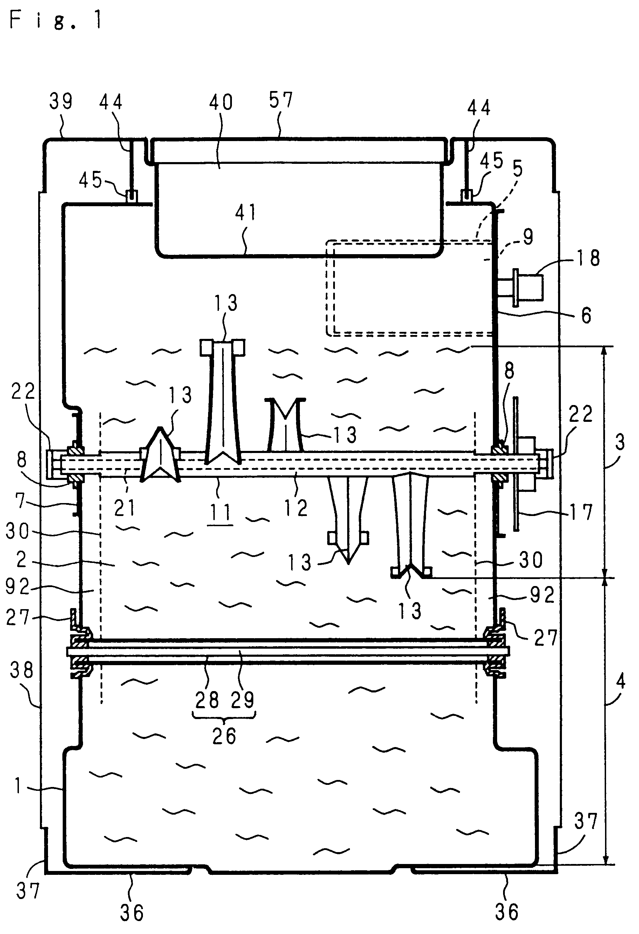

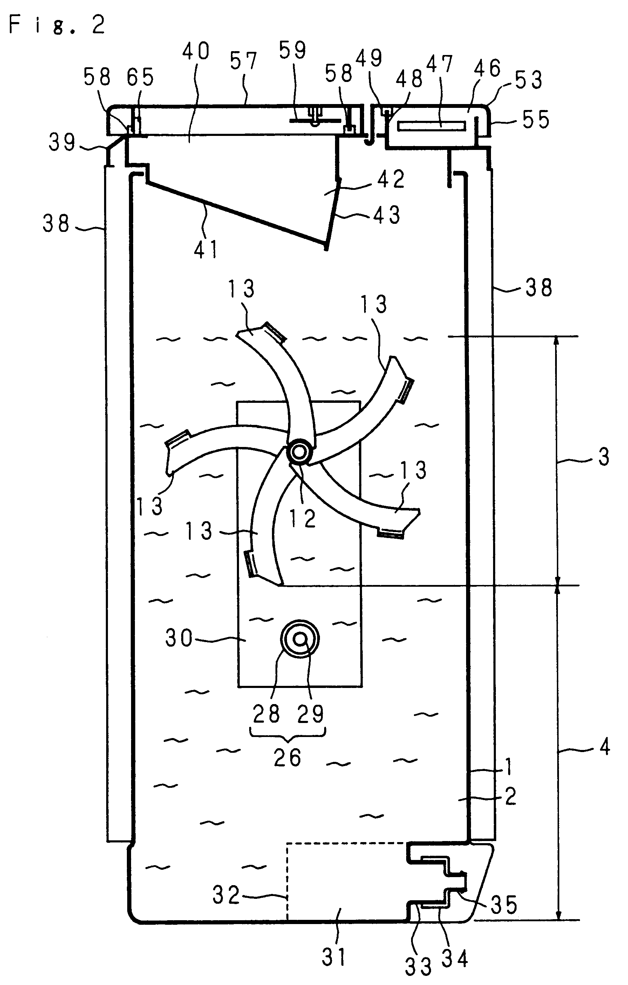

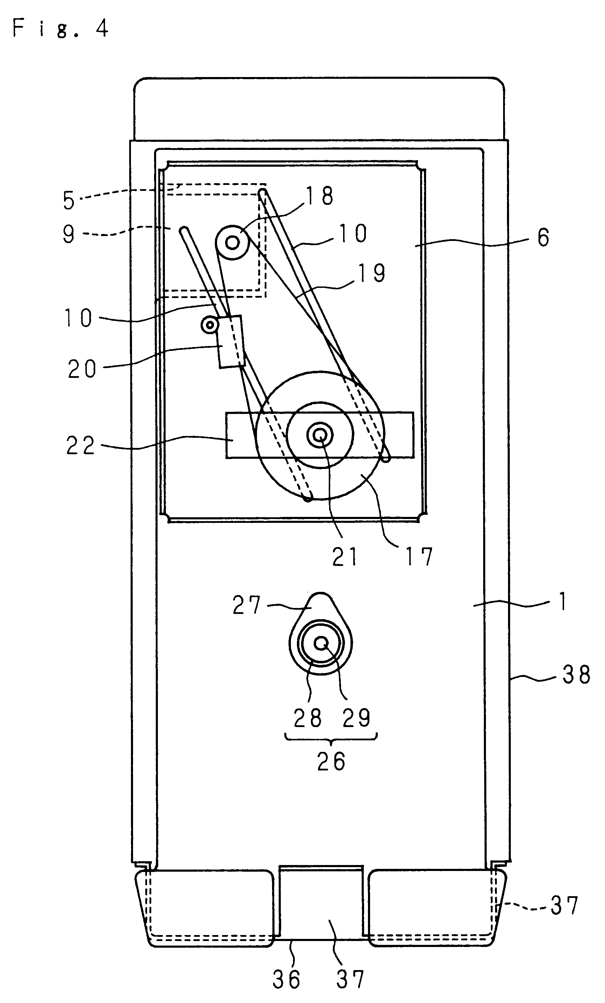

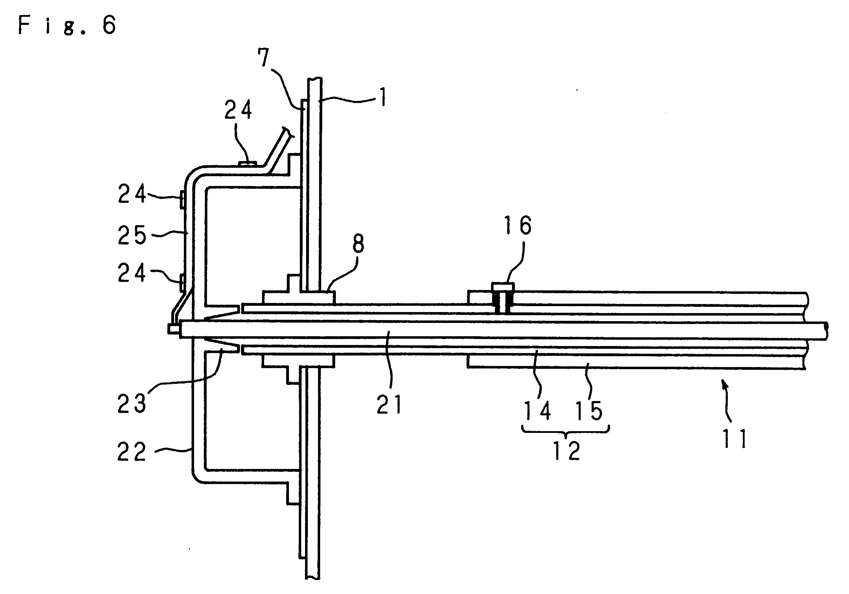

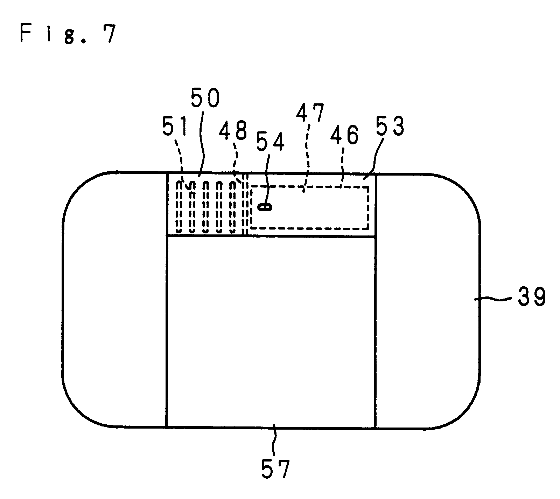

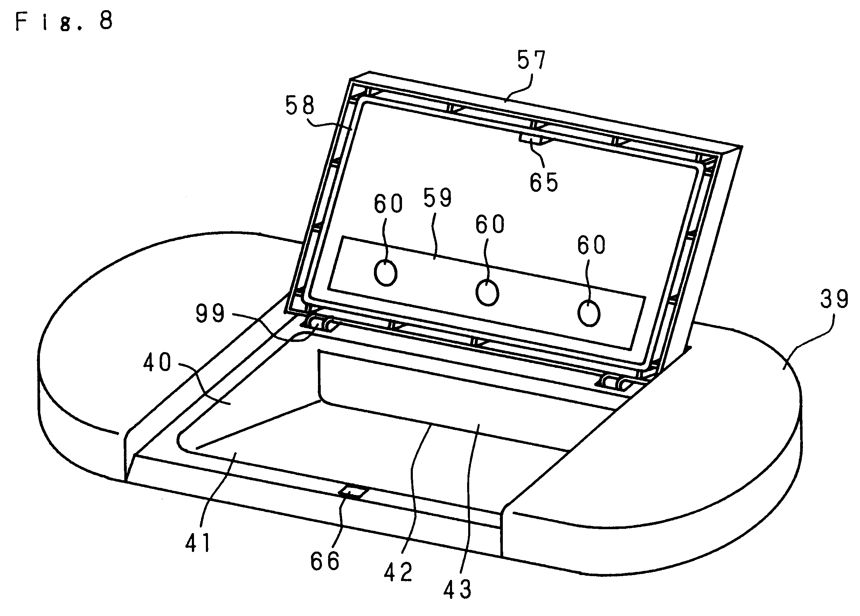

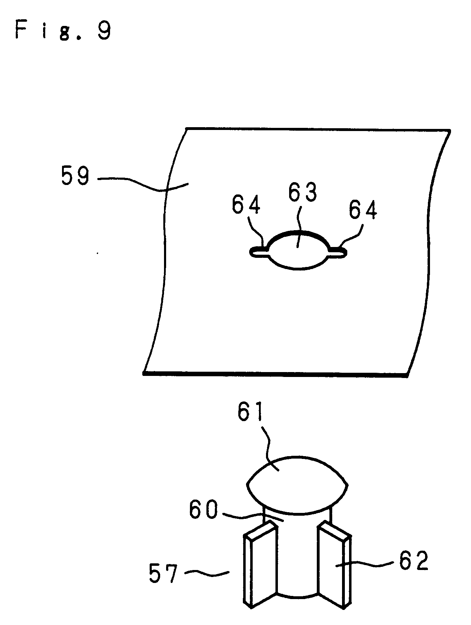

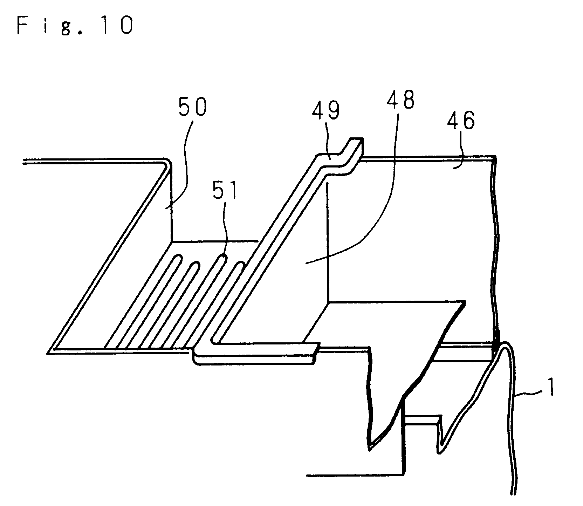

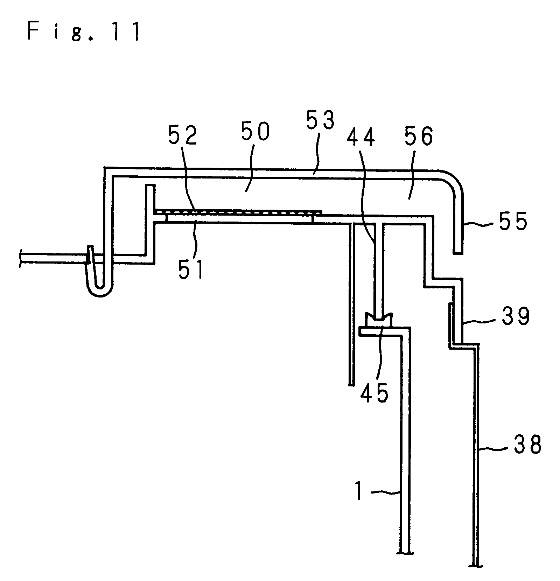

The first embodiment of the invention will first be described below with reference to Fig.1 through Fig.12.

Numeral 1 denotes a process vessel made of a synthetic resin having an opening at the top and containing a medium 2. The medium 2 has a culture medium for aschelminthes and micro-organisms including fine wooden pieces such as saw dust and rice chaff, rice bran and soil. In this embodiment, fine wooden pieces proposed in the JP-A-2-34679 (1990) "A method micro-biological processing of sludge by means of fine wooden pieces" are used. The medium 2 is formed in porous state to have high permeability for air and water and have such a property as keeps water and air therein providing a favorable environment for the reproduction of aschelminthes and micro-organisms. When the medium 2 is mixed with kitchen garbage comprising organic waste, aschelminthes such as philodina and diplogaster, and micro-organisms such as protozoa and bacteria adhering onto the kitchen garbage reproduce and decompose the kitchen garbage so that it eventually turns into carbon dioxide and water, thereby causing the kitchen garbage to disappear. The region of the process vessel 1 containing the medium 2 is divided into a processing section 3 at the top wherein a mixer screw 11 to be described later is located and a purification section 4 at the bottom wherein the mixer screw 11 is not located.

The process vessel 1 has a recess at the top thereof as a motor housing section 5, which is located above the medium 2 thereby preventing the volume of the medium 2 contained in the process 1 from being reduced. The process vessel 1 has a first reinforcement plate 6 on one side of thereof, and a second reinforcement plate 7 on another side which opposes the former. The first reinforcement plate 6 and the second reinforcement plate 7 support bearings 8 being fixed therein rotatably supporting the mixer screw 11 to be described later. The first reinforcement plate 6 supports a motor 9 fixed thereon which is capable of rotating clockwise and counterclockwise and is housed in the motor housing section 5. A reinforcement rib 10 is formed substantially in parallel with an imaginary line connecting the motor 9 and the bearing 8, in order to further reduce the deformation of the process vessel 1 when the mixer screw 11 is driven to rotate by the motor 9.

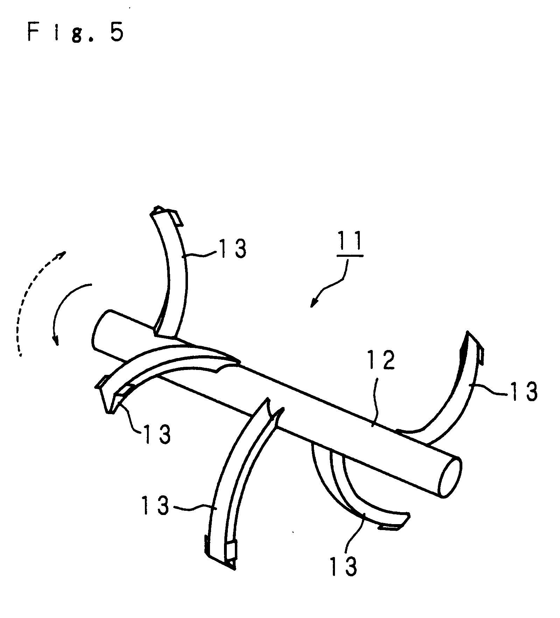

The mixer screw 11 is located in the processing section 3 above the medium 2, and comprises a rotary shaft 12 freely rotatably supported by the bearing 8 and a plurality of mixing vanes 13 fixed on the rotary shaft 12. The rotary shaft 12 and the mixing vanes 13 are made of a material having high heat conductivity and high corrosion resistance, such as stainless steel. The rotary shaft 12 has a hollow shaft 14 supported by the bearing 8 and an insertion shaft 15 provided with the mixing vanes 13 being welded thereon, while the hollow shaft 14 and the insertion shaft 15 are held together by a screw 16, so that they rotate as an integral part. The mixing vanes 13 are formed to have substantially V-shaped cross section as shown in Fig.5 and warp toward the ridge line thereof, with the bases being welded on the periphery of the insertion shaft 15 of the rotary shaft 12 in a spiral configuration.

The rotary shaft 12 is provided with a sprocket 17 fixed thereon, while a chain 19 is set to link the sprocket 17 and a sprocket 18 which is fixed on the drive shaft of the motor 9, so that the drive force of the motor 9 is transmitted by the chain 19 to drive the mixer screw 11 to rotate. The first reinforcement plate 6 supports a pressing member 20 freely oscillatably which exerts a force against the chain 19 to prevent it from slackening.

The rotary shaft 12 is provided with a first heating section 21 having a heater installed therein, with both ends thereof being supported by support members 22 made of a heat-resistant synthetic resin which are fixed on the first and the second reinforcement plates 6, 7 of both side walls, in such a manner that it does not touch the rotary shaft 12. The support member 22 is provided with a heat insulator tube 23 integrally formed therewith, to prevent heat dissipation from the first heating section 21 which protrudes from the rotary shaft 12. The support member 22 is also provided with a cord fastening members 24 integrally formed therewith, to fasten a power supply cord 25 leading to the first heating section 21. The purification section 4 in the process vessel 1 is provided with a second heating section 26 installed therein, while the second heating section 26 having a stainless steel pipe 28 fixed on a side face of the process vessel 1 via a heat insulator 27 and a heater 29 installed in the pipe 28. The first and the second heating sections 21, 26 maintain the temperature of the entire medium 2 always at about 20°C to 35°C.

A partition plate 30, formed in substantially C shape with multitude of small holes being punched therethrough, is installed on both side walls in the process vessel 1, being supported by the rotary shaft 12 of the mixer screw 11 and the second heating section 26, in order to keep a space between the partition plate 30 and the side face of the process vessel 1 thereby to secure a water passage 92 in case the medium 2 is compressed along the mixing vanes 13 by the rotation of the mixer screw 11 making it difficult to discharge water from the processing section 3 into the purification section 4. A water discharge section 31 separated by a separation plate 32 made of a metal with multitude of holes so small that the medium 2 does not leak being made therethrough is installed at the bottom of the process vessel 1 and has a drainage tube 33. A cap 34 is screwed onto the drainage tube 33 freely detachably, having a drainage port 35 which connects to a drainage pipe which is not shown in the drawing.

Lower reinforcement plates 36 made of a metal in substantially T shape are installed on both sides of the water discharge section 31 at the bottom of the process vessel 1, with the lower reinforcement plates 36 having rise-up pieces 37 which bend up along the side walls of the process vessel 1. The process vessel 1 is surrounded by a side wall plate 38 made of a metal in a cylindrical shape. The side wall plate 38 is fastened onto the the rise-up pieces 37 of the lower reinforcement plates 36 by means of screws.

The side wall plate 38 is provided with a top plate 39 made of a synthetic resin being fixed thereon by means of screws, with a garbage charging port 40 being formed from the front face toward the back face. Formed below the garbage charging port 40 is a slope 41 which slopes down toward the back face, provided with an opening 42 at the lower end of the slope 41 to communicate between the garbage charging port 40 and the inside of the process vessel 1. A shutter 43 is supported on the top plate 39 freely oscillatably to keep the opening 42 closed by its own weight, so that kitchen garbage charged through the garbage charging port 40 slides down the slope 41 to force the shutter 43 to swing open. A ring-shaped rib 44 is formed to suspend from the top plate 39, making contact with the rim of the opening at the top face of the process vessel 1 via a seal 45. Thus the air in the process vessel 1 is prevented from leaking into the space between the process vessel 1 and the side wall plate 38 via the opening in the top face of the process vessel 1.

A circuit board housing section 46 is provided between the garbage charging port 40 of the top plate 39 and another side face, and a circuit board 47 having switches and circuit components being mounted thereon is housed in the circuit board housing section 46. The circuit board 47 is sealed by molding urethane resin or the like thereon, to protect the printed circuit pattern and the circuit components on the circuit board from corrosion by the gas and humidity generated in the process of garbage decomposition. Packings 49, which make contact with a cover 53 fixed on the top plate 39, are attached on the garbage charging port 40 side and on both sides at the top of the rib 48 which partitions the circuit board housing section 46, in order to prevent the gas generated in the garbage decomposition process from leaking through the garbage charging port 40 into the circuit board housing section 46.

An exhaust section 50 separated from the circuit board housing section 46 by the rib 48 is formed adjacent to the circuit board housing section 46, with multitude of vent holes 51 being bored through in the exhaust section 50 to provide communication between the inside of the process vessel 1 and the exhaust section 50 via the vent holes 51. The vent holes 51 are covered by filters 52 to prevent insects from entering the process vessel 1 through the exhaust passage 56 and the vent holes 51. The cover 53, covering the circuit board housing section 46 and the exhaust section 50, has an operation control section 54 to allow the operation of the switch mounted on the circuit board 47 and forms a vertical piece 55 coming down from the rear side of the top plate 39. Spaces are formed between the cover 53 and the exhaust section 50, and between the back face of the top plate 39 and the vertical piece 54 of the cover 53, thereby forming an exhaust passage 56 to communicate the inside of the process vessel 1 and the outer atmosphere via the vent holes 51. Because the vertical piece 55 extends from the top of the exhaust section 51 downward, the exhaust section 50 is not exposed and the exhaust passage 56 is bent so that entry of insects can be prevented.

A lid 57 covering the garbage charging port 40 is supported on the top plate 39 to be capable of freely swinging. The lid 57 has an operating piece 99 to operate a detecting means not shown in the drawing such as a micro switch installed adjacent to the circuit board housing section 46, thereby to detect the opening of the lid 57 through the operation of the detecting means by the operation piece 99. A packing 58 is attached to the lid 57 in contact with the periphery of the garbage charging port 40 of the top plate 39, thus insects or the like are prevented from entering the process vessel 1 via the garbage discharging port 40 through the space between the top plate 39 and the lid 57.

An insecticide 59 formed in a sheet is attached on the inside of the lid 57 above the opening 42. The insecticide 59 is a molded synthetic resin such as polyolefin with a pyrethroid component added therein. Because the pyrethroid gas evaporated from the insecticide 59 has a specific gravity of eight times that of the air, it settles down to the opening 42 to prevent vermin breeding in the process vessel 1 from coming out of the garbage charging port 40 through the opening 42 and, in case the vermin should come out, exterminate them by the effect of the pyrethroid component. consequently, when the user opens the lid 57 to dump garbage, vermin will not come out thus eliminating the discomfort for the user.

A mount boss 60 is formed integrally with the lid 57, having a enlarged head section 61 at the end, while forming a radial ribs 62 on the side separated from the head section 61. The insecticide 59 has a set hole 63 having a pair of slits and a diameter greater than that of the stem of the mount boss 60 but smaller than that of the head section 61. The insecticide 59 is is set between the head section 61 of the mount boss 60 and the radial ribs 62 by deforming the set hole 63 by using the slits 64. The radial ribs 62 keep a space between the insecticide 59 and the lid 57 to allow effective evaporation of the insecticide. A magnet 65 attached on the lid 57 attracts a ferromagnetic object 66 attached on the periphery of the garbage charging port 40 of the top plate 39, thereby preventing the lid 57 from being opened by a strong wind, and causing the packing 58 attached to the lid 57 to make close contact with the the periphery of the garbage charging port 40.

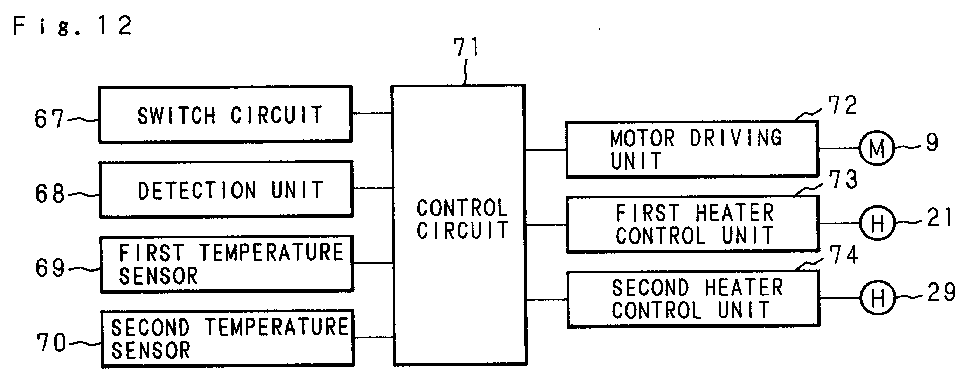

The control system in the first embodiment will now be described with reference to Fig.12. In Fig.12, numeral 71 denotes a control circuit comprising a microcomputer. A switch circuit 67 having a switch mounted on the circuit board 47, a detection unit 68 having a micro switch or the like to detect opening of the lid 57. a first temperature sensor 69 to detect the temperature of the medium 2 in the processing section 3, and a second temperature sensor 70 to detect the atmospheric temperature are connected to the input terminals of the control circuit 71. Output terminals of the control circuit 71 are connected to a motor driving unit 72 to control the motor 9, a first heater control unit 73 which controls the energization of the first heating section 21, and a second heater control unit 74 which controls the energization of the heater 29 of the second heating section 26.

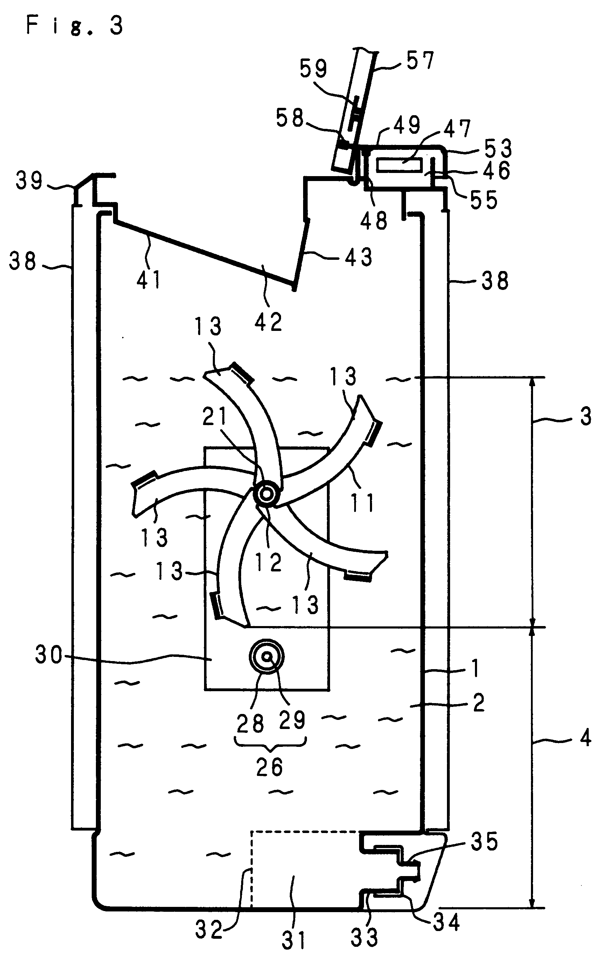

To dispose of garbage, the lid 57 is opened and kitchen garbage is thrown through the garbage charging port 40 onto the slope 41 thereby charging the garbage together with water into the process vessel 1. At this time, because the lid 57 opens to cover the operation control section 54 as shown in Fig.3, accidental operation of the operation control section 54 while the lid 57 is open is prevented. Even when the operation control section 54 is operated when the lid 57 is open, the detection unit 68 senses that the lid 57 is open so that the control circuit 71 shuts down the power to the motor 9, thus preventing the mixer screw 11 from rotating when the lid 57 is open.

When charging of the garbage is completed, the lid 57 is shut and the operation control section 54 is operated. Under this condition, upon receipt of the input signal from the detection unit 68 indicating that the lid 57 is closed, the control circuit 71 allows the motor 9 to rotate clockwise according to the operation of the operation control section 54, causing the mixer screw 11 to rotate in the direction indicated by the arrow of solid line shown in Fig.5. Because the mixer screw 11 rotates toward the ridge line side of the V-shaped cross section of the mixing vane 13, the garbage and the medium 2 are easily forced to move in the axial direction, allowing the mixer screw 11 to rotate with relatively small load. Also because the mixing vanes 13 are warped toward the ridge line side, they are capable of efficiently bringing the garbage located on the medium 2 into the medium 2, so that the garbage and the medium 2 are mixed with each other efficiently in a short period of time. Moreover, because the mixing vanes 13 are arranged in a spiral configuration, it moves the garbage and the medium 2 not only in the rotating direction but also in the axial direction while mixing them, thereby improving the mixing efficiency further.

After the motor 9 has been rotating clockwise for a specified period of time, 20 seconds in this embodiment, the control circuit 71 stops the operation and, after a specified period of time required for the motor 9 to stop completely, 5 seconds in this embodiment, controls the motor 9 to rotate counterclockwise thereby to cause the mixer screw 11 to rotate in the direction indicated by the arrow of dashed line shown in Fig.5. Because the control circuit 71 controls the motor 9 to rotate counterclockwise after completely stopping, counter-electromotive force is not generated when the motor 9 is started, thereby elongating the service life of the motor 9. When the motor 9 is rotating counterclockwise, the mixing vanes 13 mix the garbage and the medium 2 while forcing them outward, thus pressing the garbage against the side wall of the process vessel 1 to grind it. Although the mixer screw 11 is loaded heavier when rotating in this direction than in the case of clockwise rotation, it provides higher grinding effect. After the motor 9 has been rotating counterclockwise for a specified period of time, 20 seconds in this embodiment, the control circuit 71 stops the operation and, after a specified period of time required for the motor 9 to stop completely, controls the motor 9 to rotate clockwise again. After the motor has repeated clockwise and counterclockwise rotation alternately for 20 minutes, the operation is stopped.

When kitchen garbage is charged into the process vessel 1, aschelminthes such as philodina and diplogaster and micro-organisms such as protozoa and bacteria carried by the garbage reproduce on the medium 2 in the processing section 3, so that the garbage is digested mainly by the philodina, diplogaster and protozoa, thereby to disappear. Because the kitchen garbage charged into the process vessel 1 has been ground between the mixer screw 11 and the side wall of the process vessel 1, it is decomposed and disappear in a relatively short period of time. Also because the medium 2 is kept at a temperature favorable for the activities of the aschelminthes and micro-organisms by the first and the second heating sections 21, 26, the aschelminthes and micro-organisms are made active thereby improving the efficiency of decomposing and disposing of the kitchen garbage.

Water supplied into the process vessel 1 together with the garbage is discharged into the water discharge section 31 through the purification section 4 together with water generated by the decomposition of the garbage. While the water contains intermediate products of the decomposition, namely sugars, amino acids, organic acids, etc., these intermediate products are decomposed by the microorganisms, particularly bacteria, reproducing on the medium 2 in the purification section 4, thereby purifying the water which is then discharged into the water discharge section 31. Excreta and dead bodies of the aschelminthes and micro-organisms are decomposed by bacteria. Above-mentioned intermediate products, excreta and dead bodies of the aschelminthes and micro-organisms, are decomposed also by bacteria which reproduce on the medium 2 in the processing section 3. Due to the food chain of the aschelminthes and micro-organisms described above, kitchen garbage can be decomposed almost completely without no significant odor released nor remnant being left. As a result, it is possible to suppress the generation of compost and to decrease the BOD (biochemical oxygen demand) level in the discharged water.

When the second temperature sensor 70 detects an atmospheric temperature below a specified temperature, 10°C in this embodiment, the control circuit 71 controls the motor 9 to rotate clockwise at specified time intervals, so that the mixer screw 11 rotates in the direction indicated by the arrow of solid line in Fig.5. Because the rotary shaft 12 and the mixing vanes 13 are made of a material having a high heat conductivity, heat generated in the first heating section 21 is transmitted efficiently to the medium 2 via the mixing vanes 13, thereby to heat the medium 2 evenly as the mixer screw 11 rotates. Also because the mixer screw 11 rotates in the direction of arrow of solid line shown in Fig.5, loads on the process vessel 1 and the medium 2 are relatively low, enabling it to reduce the breakage of the process vessel 1 or other components and breakage of the medium 2 into fine pieces.

In case the medium 2 is compressed to solidify by the mixing vanes 13 as the mixer screw 11 rotates, and garbage, in particular such garbage that includes contents much hard to decompose such as starch and gluten, is charged beyond the processing capability of the micro-organisms, although water permeation is impeded in the space between the processing section 3 and the purification section 4 surrounding the mixing vanes 13, it does not cause the reproduction of the aschelminthes and micro-organisms cultivated in the medium 2 in the processing section 3 to be adversely affected by the stagnant water in the processing section 3, because the water in the process vessel 3 is discharged through the water passage 92 to the purification section 4.

Water discharged into the drainage section 31 is discharged through the drainage pipe via the drainage port 35. When the partition plate 32, which partitions the drainage section 31, or the drainage port 35 is clogged, the cap 34 is removed from the drainage tube 33 and a brush or the like is put into the drainage port 31 through the drainage tube 33 to clean the partition plate 32 and the drainage port 35.

When repairing the motor 9 or the chain 19 which has been broken, the top plate 39 is removed from the side wall plate 38 and the set screw securing the lower reinforcement plate 36 and the side wall plate 38 is unscrewed to lift off the side wall plate 38, thereby the motor and the chain 19 can be easily made accessible, improving the serviceability.

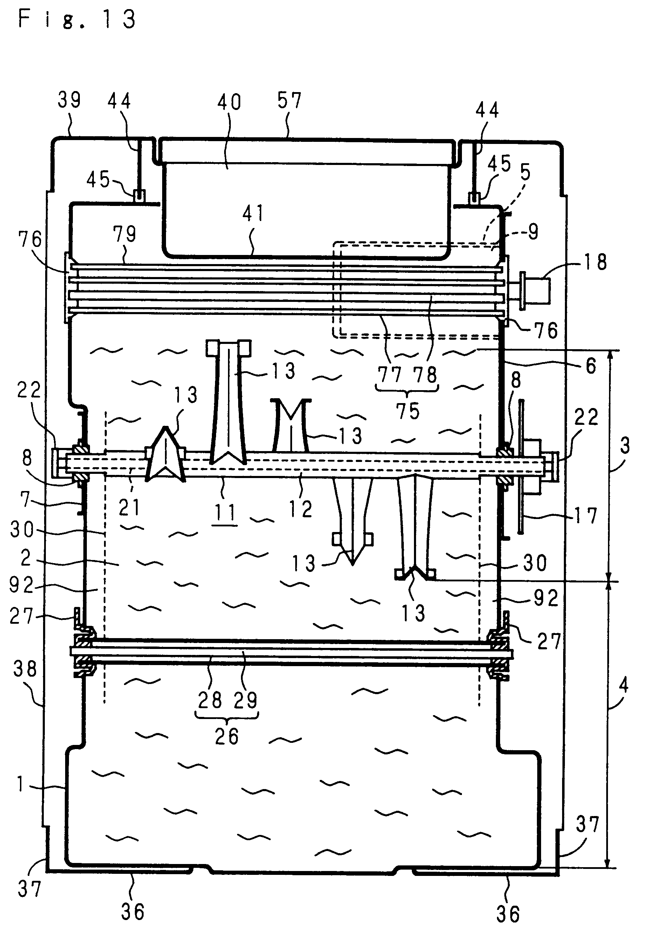

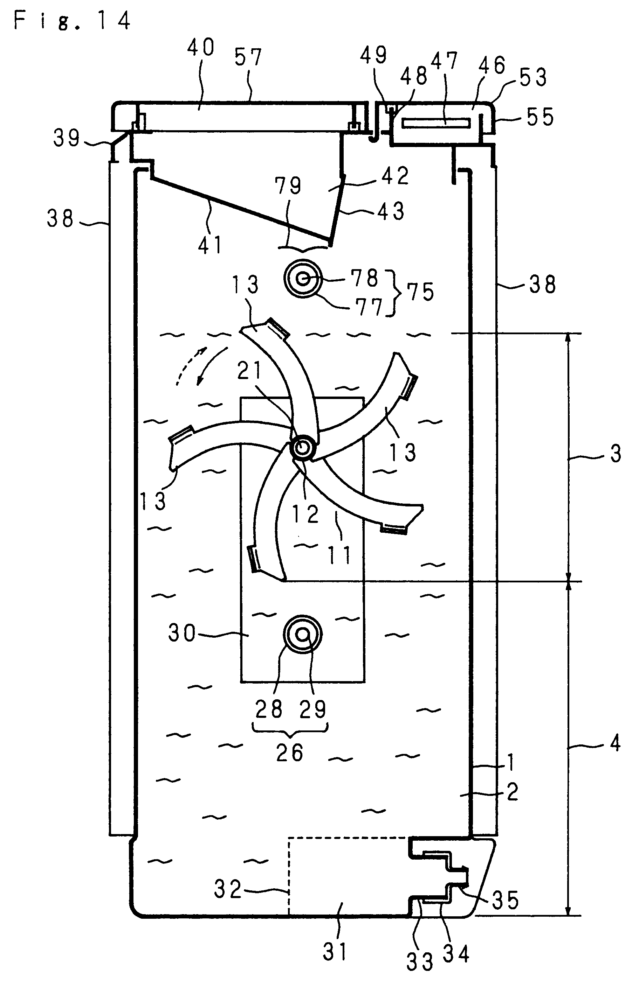

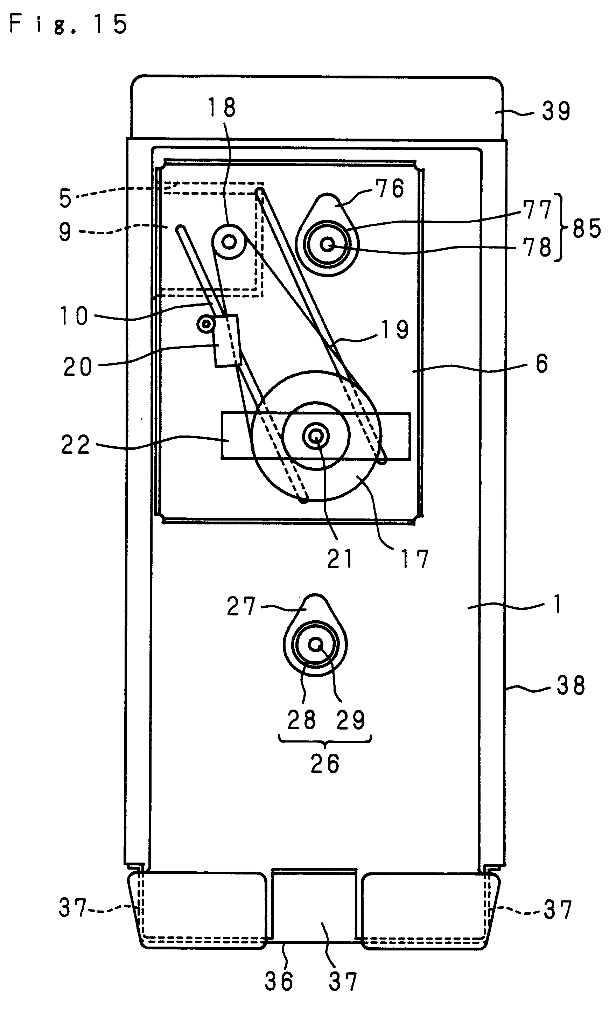

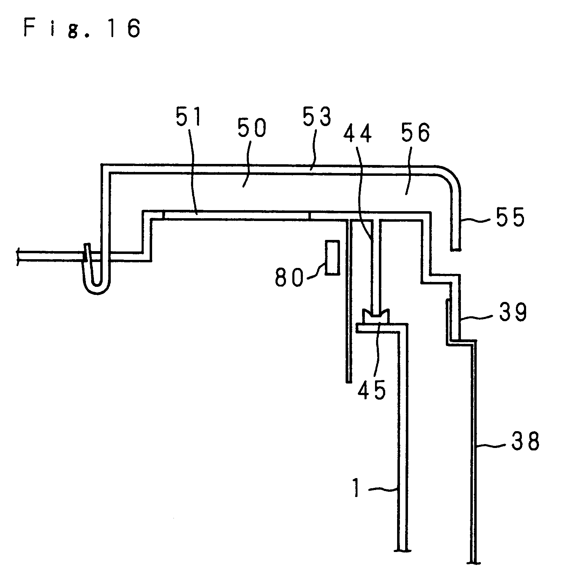

The second embodiment of the invention will now be described with reference to Fig.13 through Fig.17. The components identical with those in the first embodiment are assigned the same numerals and description thereof will be omitted.

A third heating section 75 is located in a space above the medium 2 at the upper part of the process vessel 1. The third heating section 75 has a stainless steel pipe 77 which is fixed on the side wall of the process vessel 1 via an insulator 76 and a heater 78 installed in the pipe 77. A reflector 79 is installed between the third heating section 75 and the slope 41 of the garbage charging port 40, to reflect the heat radiation from the third heating section 75 toward the side wall of the process vessel 1, to eradicate the larva of vermin having a habit of crawling upward along the side wall of the process vessel 1, and prevent the slope 41 from being deformed by the heat from the third heating section 75. Also a third temperature sensor 80 which detects the temperature in the upper part of the process vessel 1 is installed in the vicinity of the exhaust section 50.

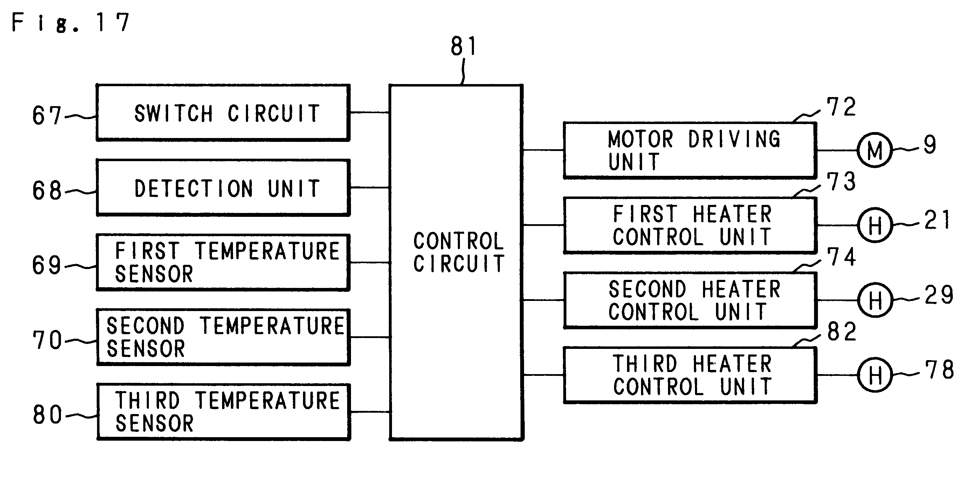

The control system of the second embodiment will be described below with reference to Fig.17. Numeral 81 denotes a control circuit which receives input signals from the switch circuit 67, detection unit 68, first temperature sensor 69, second temperature sensor 70, and the third temperature sensor 80, and controls the motor driving unit 72 with controls the motor 9, the first heater control unit 73 which controls the energization of the first heating section 21, the second heater control unit 74 which controls the energization of the heater 29 of the second heating section 26, and a third heater control unit 82 which controls the energization of the heater 78 of the third heating section 75.

The imago and larva of vermin have a habit of coming onto the medium 2 and, even when the imago and larva of the vermin are mixed into the medium 2 by the rotation of the mixer screw 11, they come out onto the medium 2 again in a certain period of time. To counter this, the control unit 81 controls the third heating section 75 so that the third heating section 75 heats up in a specified period of time required for most of the vermin mixed into the medium 2 by the rotation of the mixer screw 11 to come out onto the medium 2 after the motor 9 stopped operation, one hour in the case of this embodiment. And when it is decided that the temperature in the space above the medium 2 in the process vessel 1 has reached 50°C where imago and larva of the vermin such as fly die based on the output from the third temperature sensor 80, the control circuit 81 controls the heating operation to keep the temperature of the space above the medium 2 in the process vessel 1 at about 50 to 65°C where the imago and larva of the vermin perish but the aschelminthes and micro-organisms in the medium 2 do not die, for a specified period of time, five minutes in the case of this embodiment, so that the vermin are surely extinct.

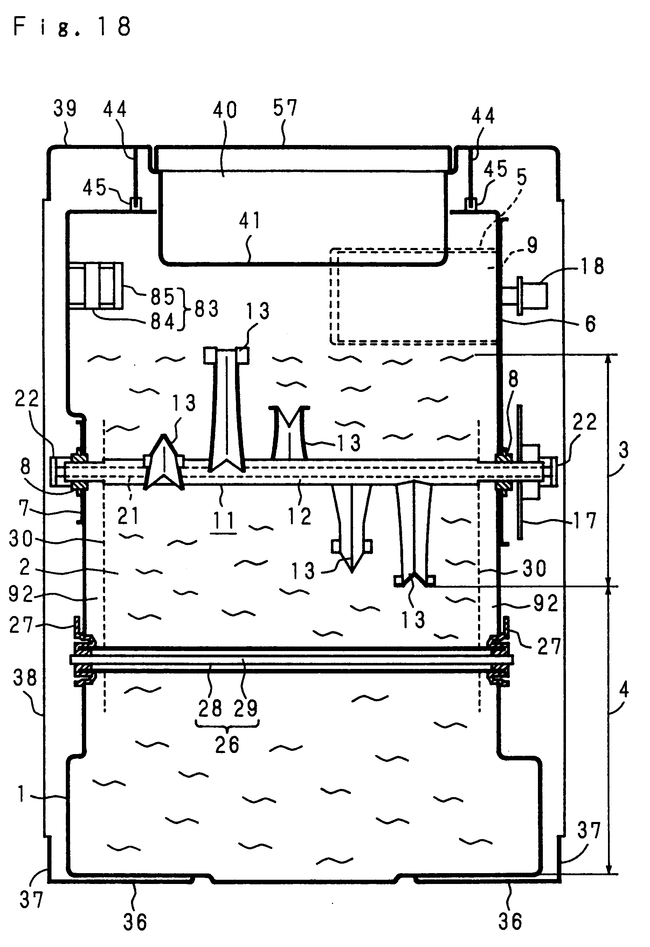

The third embodiment of the invention will now be described with reference to Fig.18. The components identical with those in the first embodiment are assigned the same numerals and description thereof will be omitted.

A warm air generator 83 which serves as a fourth heating section is installed in the space above the medium 2 in the process vessel 1. The warm air generator 83 has a blower fan 84 fixed on the side wall of the process vessel 1 via a heat insulator, and a heater 85 fixed on the blower fan 84 via a heat insulator. Similar to the second embodiment described above, the warm air generator 83 starts operation in a specified period of time after the mixer screw 11 stops to heat the air by means of the heater 85 while circulating the air in the process vessel 1 by means of the blower fan 84, and keeps the space above the medium 2 in the process vessel 1 at such a temperature as the vermin perish but the aschelminthes and micro-organisms in the medium 2 do not die, that is about 50 to 65°C, for at least five minutes.

In the third embodiment, because the warm air generator 83 is used as heating means, it is possible to heat the space above the medium 2 in the process vessel 1 at such a temperature as the vermin perish in a shorter time than in the case of the second embodiment.

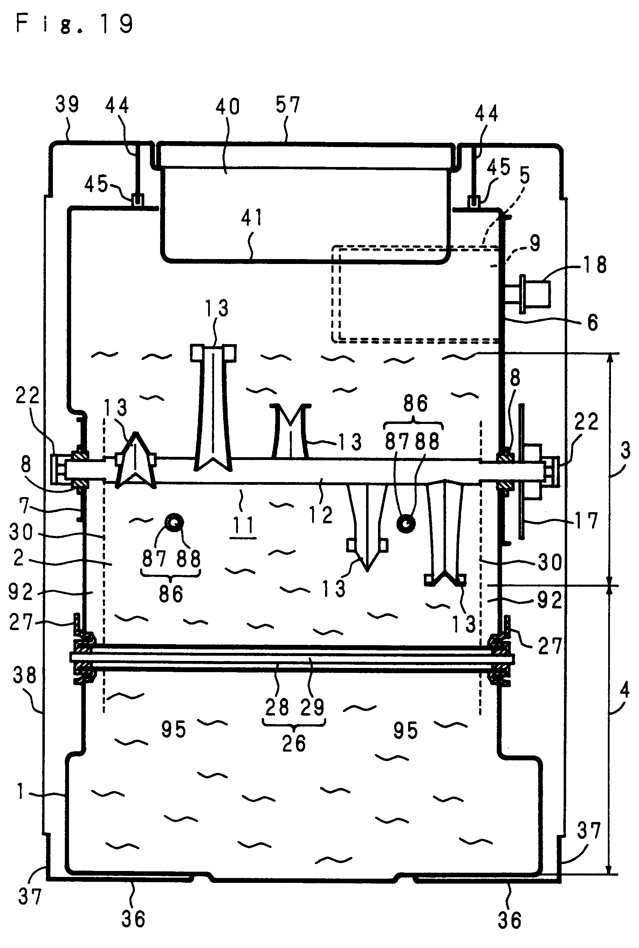

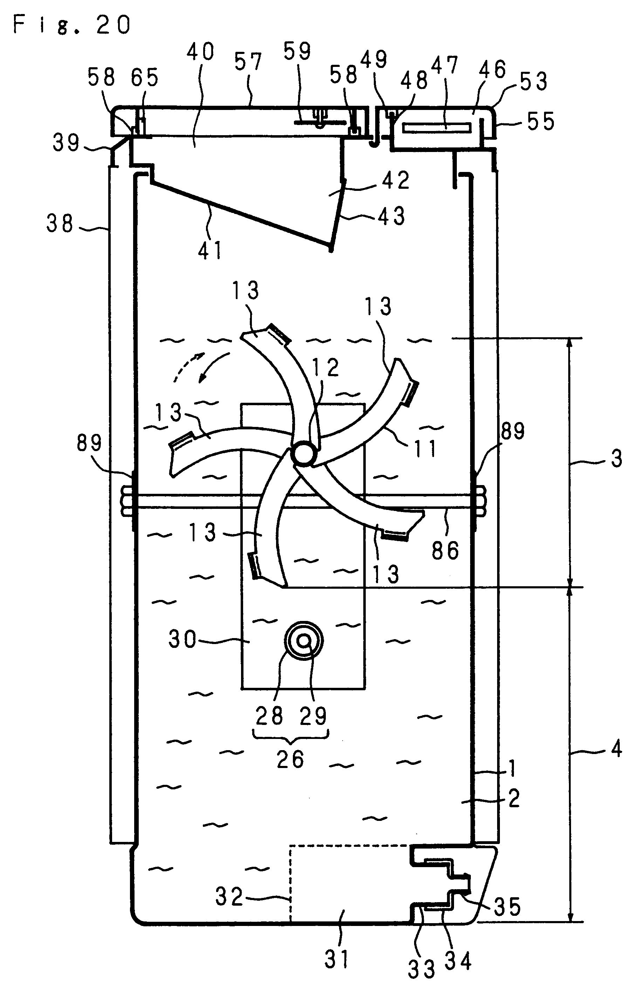

The fourth embodiment of the invention will now be described with reference to Fig.19 and Fig.20. The components identical with those in the first embodiment are assigned the same numerals and description thereof will be omitted.

A fifth heating section 86 having a stainless pipe 87 arranged in a direction substantially perpendicular to the rotary shaft 13 of the mixer screw 11 and a heater 88 installed in the pipe 87, is installed in the processing section 3 of the process vessel 1. The pipe 87 is fixed, with a heat insulation measure, on both opposing side walls of the process vessel 1 via a reinforcement plate 89, thereby reinforcing the process vessel 1 by means of the pipe 87 of the fifth heating section 86, in order to prevent the process vessel 1 from deforming due to the weight of the medium 2 or due to the force exerted onto the process vessel 1 by the medium 2 and garbage being pressed thereto by the mixer screw 11.

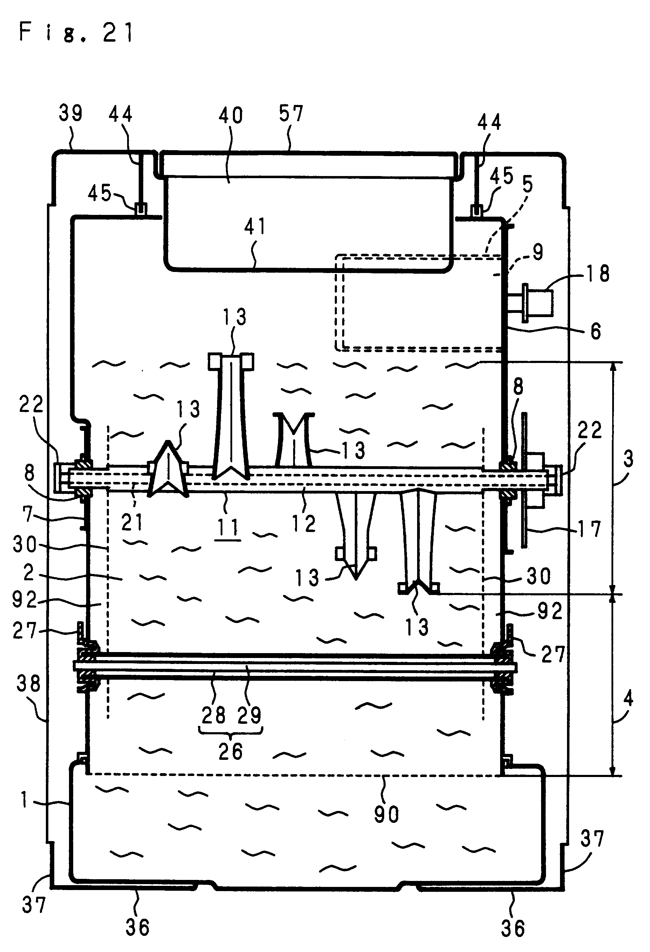

The fifth embodiment of the invention will now be described with reference to Fig.21. The components identical with those in the first embodiment are assigned the same numerals and description thereof will be omitted.

A punch metal 90 is placed at the bottom of the process vessel 1. Water generated in the decomposition process of the garbage in the process vessel 1 flow through the punch metal 90 to be discharged into a purification tank 91. The purification tank 91 serves as a purification section whereon the process vessel 1 is fixed detachably, and contains the medium 2 so that the water discharged from the process vessel 1 is purified by the bacteria reproducing on the medium 2 and is discharged via a drainage pipe not shown in the drawing.

In the fifth embodiment, because the water which has been purified in the purification section 4 of the process vessel 1 is further purified by the bacteria reproducing on the medium 2 in the purification tank 91, high level of purification is made possible. Also because the process vessel 1 and the purification vessel 91 are made separately, both vessels 1 and 91 can be made compact and easy to handle, making it easy to inspect and maintain the vessels 1 and 91.

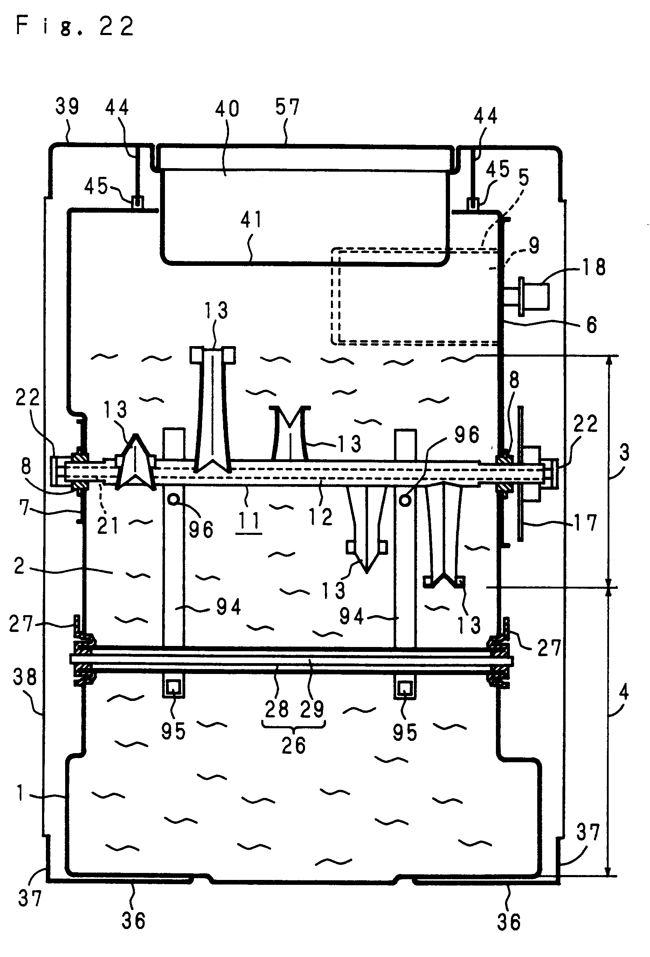

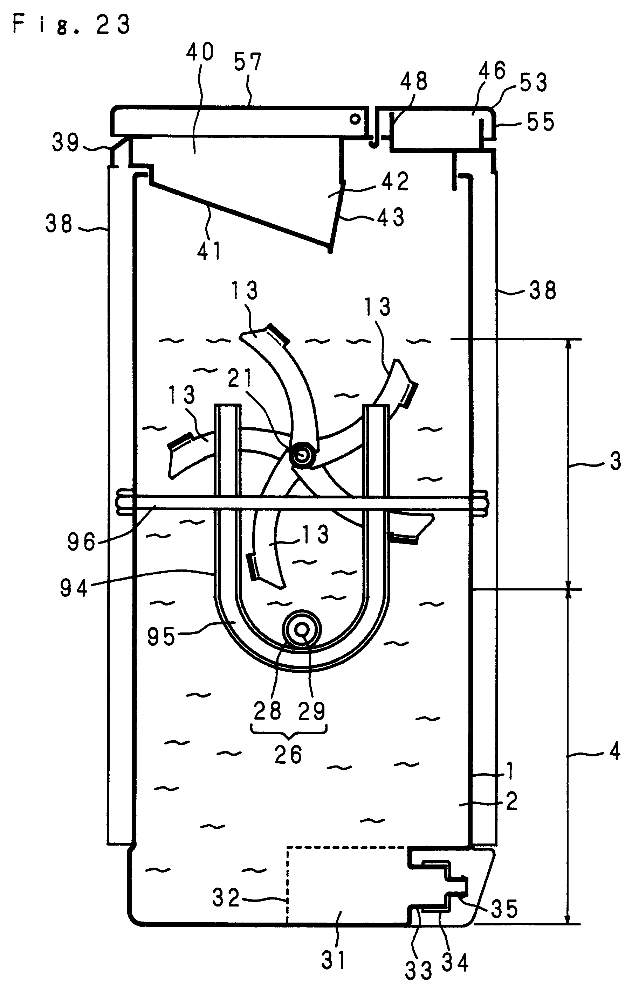

The sixth embodiment of the invention will now be described with reference to Fig.22 and Fig.23. The components identical with those in the first embodiment are assigned the same numerals and description thereof will be omitted.

A square pipe 94 having substantially U shape is installed to run from the processing section 3 to the purification section 4. The square pipe 94 is made of a corrosion-resistant material having a high heat conductivity such as stainless steel, having a multitude of small holes bored through side faces thereof not shown in the drawing, and provides its inner space as a water passage 95 to discharge water from the processing section 3 to the purification section 4. Lower part of the square pipe 94 is fixed heat-conductively on the pipe 28 of the second heating section 26, and the upper part of the square pipe 94 is supported by penetrating therethrough a reinforcing member 96 fixed on both side walls of the process vessel 1 in a direction substantially perpendicular to the rotary shaft 12 of the mixer screw 11.

According to the sixth embodiment, the heat generated by the second heating section 26 is transmitted by the square pipe 94 to heat the medium 2 in the processing section 3 more evenly than in the case of the above embodiments, thus improving the efficiency of garbage decomposition further. The water flowing in the water passage 95 is heated by the heat generated by the second heating section 26 and transmitted through the square pipe 94, and is supplied to the purification section 3. Because the square pipe 94 is arranged between the mixing vanes 13, the water supplied through the water passage 95 to the purification section 4 is poured in the purification section 4 at substantially central part thereof, enabling effective purification utilizing the entire medium 2 in the purification section 4 and, at the same time, accelerates the purification process by the micro-organisms by heating the purification section 4 as a whole. Also because the square pipe 94 is arranged between the mixing vanes 13, garbage can be ground between the square pipe 94 and the mixing vanes 13 so that the garbage is ground into smaller pieces and the efficiency of processing the garbage is improved.

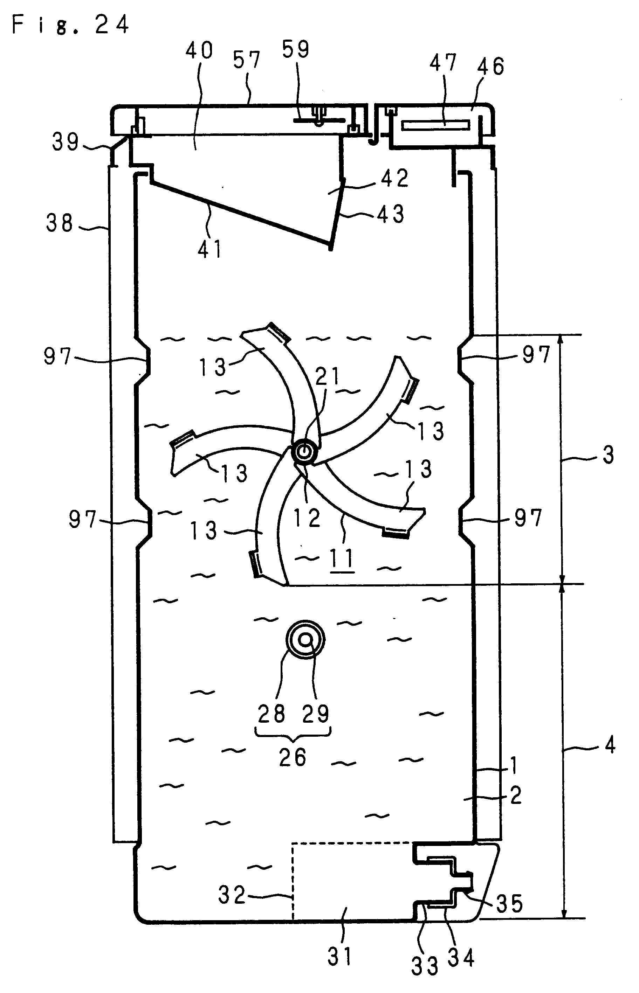

The seventh embodiment of the invention will now be described with reference to Fig.24 through Fig.27. The components identical with those in the first embodiment are assigned the same numerals and description thereof will be omitted.

As shown in Fig.24, the process vessel 1 has a plurality of reinforcement recesses 97 being formed on the side face toward the inside of the process vessel 1, with the upper reinforcement section 97 serving as a mark indicating the standard volume of medium 2 contained in the process vessel 1.

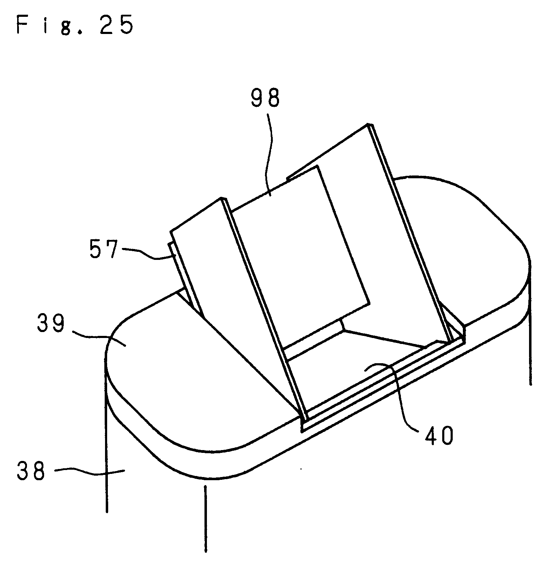

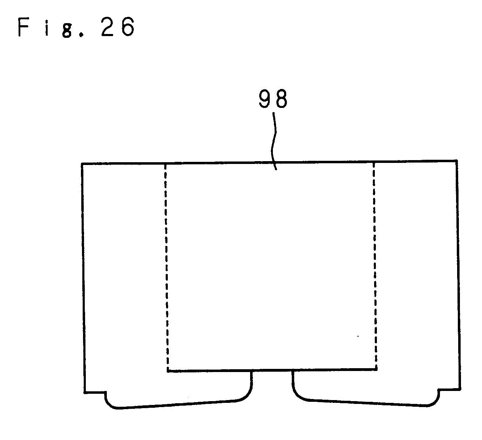

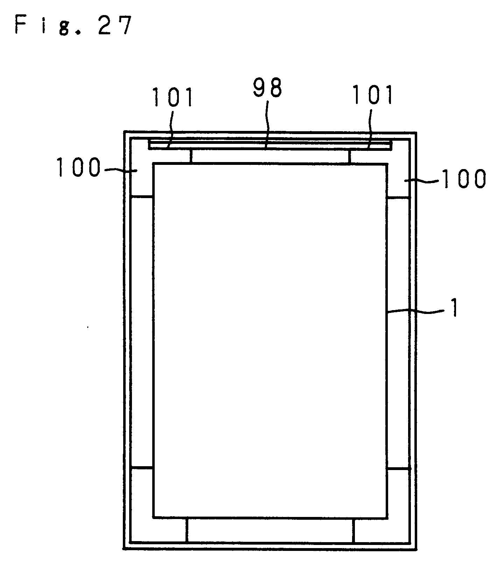

Because the medium 2 consists of fine wooden pieces, it is hardly decomposed by the aschelminthes and micro-organisms, nevertheless it is decreases in a long period of operation due to drainage together with the discharged water. When the inside of the process vessel 1 is exposed by opening the shutter 43, the upper reinforcement section 97 being out of the medium 2 to be seen indicates that the medium 2 is short of the standard quantity. In this case, a charging guide 98 shown in Fig.26 is folded and installed to cover the lid 57 as shown in Fig.25, and a required amount of medium 2 is supplied using the charging guide 98 and the slope 41 as the guide. Because the charging guide 98 is installed so as to over the lid 57, the medium 2 is prevented from being spilled onto the lid sensor of the lid 57 along an operating piece 99, and therefore operation failure of the lid 57 and sensing failure for the open/close state of the lid 57 are prevented. The charging guide 98 is fitted into notches 101 formed in upper shock absorbers 100 as shown in the package drawing of Fig.27, to keep a space between the upper shock absorbers 100 to reinforce the strength of the side face and the top face.

According to the seventh embodiment, the quantity of the medium 2 in the process vessel 1 can be easily checked in a simple constitution, thereby preventing the garbage processing capability from decreasing due to shortage of the medium and maintaining high garbage processing capability.

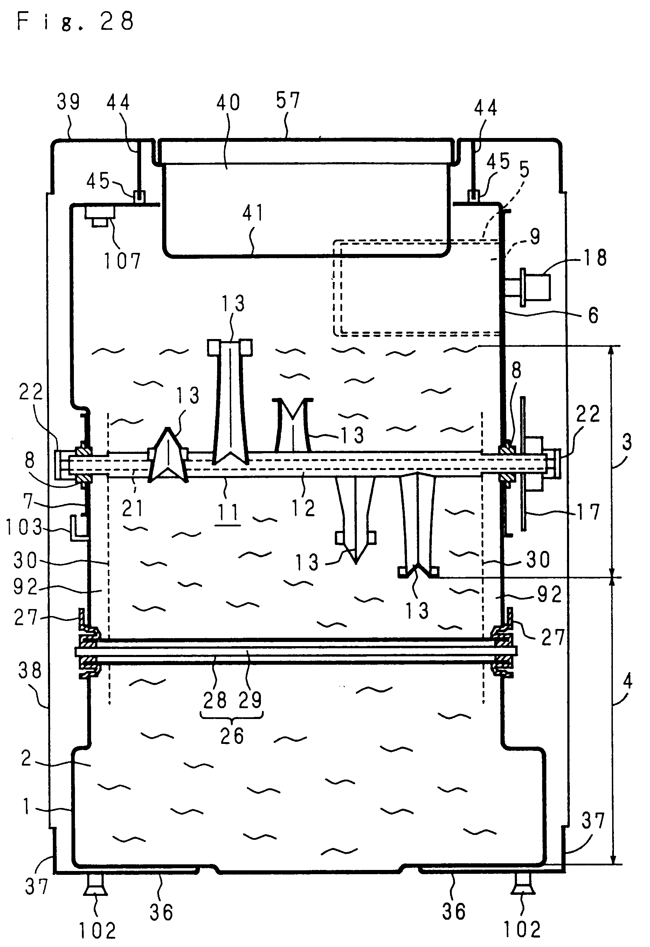

The eighth embodiment of the invention will now be described with reference to Fig.28 through Fig.33. The components identical with those in the first embodiment are assigned the same numerals and description thereof will be omitted.

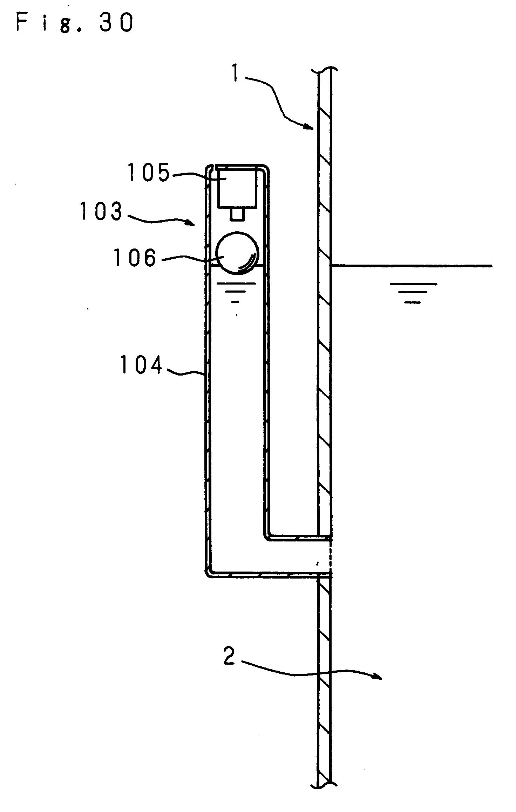

In the eighth embodiment, a weight sensor 102 is installed on the bottom of the process vessel 1 to detect the weight of the process vessel 1. A water level sensor 103 to detect the water level in the process vessel 1 is installed on the intermediate side wall of the process vessel 1 for the detection of the overload state of the aschelminthes and micro-organisms. Fig.30 is an enlarged sectional drawing of the water level sensor 103. The water level sensor 103 has a L-shaped pipe 104 with the lower end being fixed on a side wall of the process vessel 1 and another end erecting vertically upward, and a switch 105 installed in the pipe 104 at the top end thereof, and a float 106 housed in the pipe 104 which moves up and down as the water level in the pipe 104 changes.

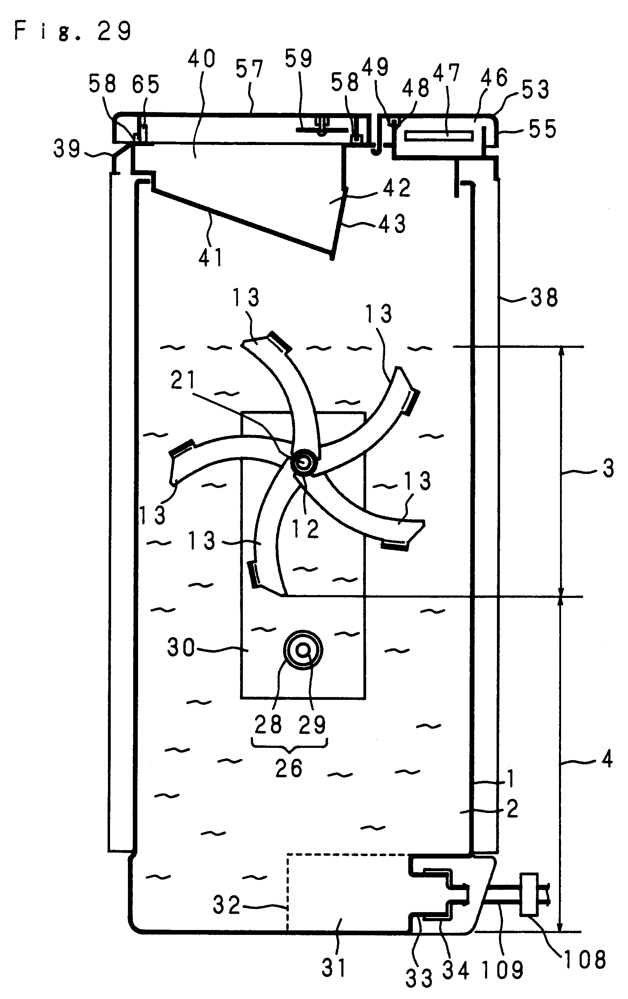

The sensor to detect the overload state is not limited to the water level sensor 103, but an odor sensor 107 to detect odor in the process vessel 1 or a BOD sensor 108 to detect the BOD level in the waste water discharged from the process vessel 1 may be used instead. As shown in Fig.28 and Fig.29, for example, the odor sensor 107 is installed on the upper part of the process vessel 1 and the BOD sensor 108 is installed in a drainage pipe 109 which connects to the drainage port 35.

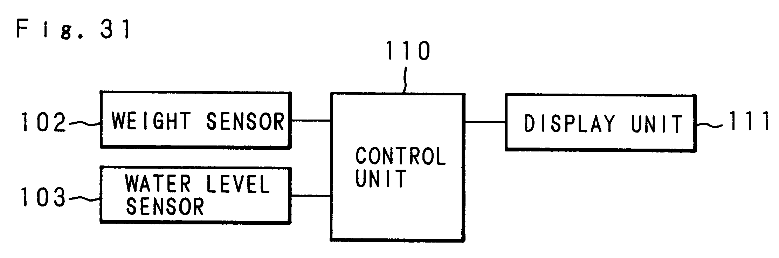

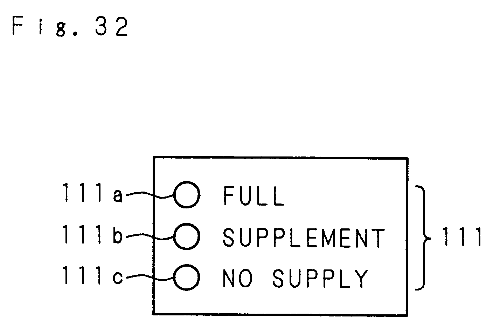

Fig.31 is a block diagram of the control system in the eighth embodiment. Connected to input terminals of a control unit 110 which controls the garbage processing state are the weight sensor 102 and the water level sensor 103, and output terminals of the control unit 110 are connected to a display unit 111 which displays the processing state. Fig.32 is a plan view drawing of the display unit 111 which is mounted on the circuit board 47.

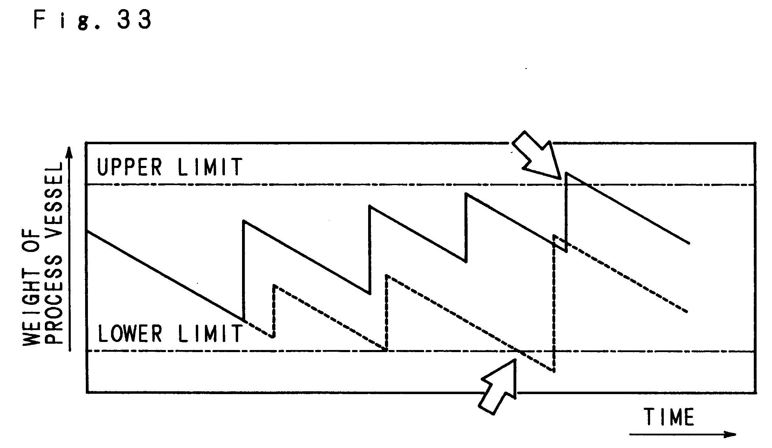

The control of the processing operation based on the result of detection by the weight sensor 102 will now be described below. The weight sensor 102 detects the weight of the process vessel 1 and sends the result of detection to the control unit 110. The control unit 110 monitors the state of processing in the process vessel through the result of detection by the weight sensor 102. Fig.33 is a schematic diagram illustrative of the change in the detection data from the weight sensor 102 with time. The weight of the process vessel 1 shows a sudden increase when garbage is introduced, by the amount of the garbage introduced, then shows gradual decrease with time as the decomposition process proceeds, thus showing a saw-teeth like changing pattern as shown in the drawing. While the capacity of processing kitchen garbage in the process vessel 1 depends on the state of reproduction of the aschelminthes and micro-organisms in the medium 2, the state of reproduction reaches an equilibrium upon lapse of a specified period of time after the start of operation, thereby providing always stable processing capacity substantially corresponding to the quantity of the medium 2. Thus when the kitchen garbage is charged frequently or in an excessive quantity, the weight of the process vessel 1 increases with time as indicated by the solid line in the drawing.

When the weight of the process vessel 1 as recognized according to the input from the weight sensor 102 exceeds a specified upper limit, it is judged in the control unit 110 that an excessive amount of kitchen garbage has been charged into the process vessel 1 beyond its processing capacity and that complete decomposition would be made impossible in the subsequent process. Then the control unit 110 sends a display command to the display unit 111 at the point of time indicated by a white-inside arrow in the drawing, so that the operator is notified to refrain from charging the kitchen garbage. According to this display command, a full lamp 111a (see Fig.32) illuminates on the display unit 111. Thus by limiting the charging of the kitchen garbage according to the illumination of the full lamp 111a, processing of the kitchen garbage in the process vessel 1 can be always maintained in a proper state. Although the medium 2 in the process vessel 1 needs not be replenished, it leaks to the outside together with water during processing, thus gradually decreasing with time. In case such a decrease of the medium 2 happens, the weight of the process vessel 1 decreases over a long period of time as indicated by the dashed line in Fig.33.

When the weight of the process vessel 1 as recognized according to the input from the weight sensor 102 decreases below a specified lower limit, it is judged in the control unit 110 that the medium 2 has decreased and needs to be replenished. Then the control unit 110 sends a display command to the display unit 111 at the point of time indicated by a white-inside arrow in the drawing, so that the operator is notified to add the medium 2. According to this display command, a supplement lamp 111b (see Fig.32) illuminates on the display unit 111. Thus decrease in the processing capacity due to shortage of the medium 2 can be surely prevented by replenishing the medium 2 according to the illumination of the supplement lamp 111b.

The result of detecting the weight of the process vessel 1 by the weight sensor 102 represents the state of processing in the process vessel 1, and therefore may be used in other purposes than illuminating the full lamp 111a to control the quantity of kitchen garbage charged and illuminating the supplement lamp 111b to notify to replenish the medium 2. For example, a change in the weight of the process vessel 1 as shown in Fig.33 may be displayed in a graph against an appropriate time scale for the operator to see the display and decide whether the kitchen garbage disposal process in the process vessel 1 is in satisfactory state or not, and whether any trouble has occurred in the process vessel 1.

As described above, because the weight sensor 102 is provided to detect the weight of the process vessel 1 so that the kitchen garbage disposal process in the process vessel 1 can be monitored by means of the result of detection by the weight sensor 102, inside of the process vessel 1 can be always kept in a suitable environment to allow the aschelminthes and micro-organisms in the medium 2 to decompose the kitchen garbage completely, thereby making it possible to dispose of the kitchen garbage in a sanitary condition without trouble.

The operation to detect the state of overload of the aschelminthes and micro-organisms in the process vessel 1 and the control based on the result of the detection will now be described below. An overload state of the aschelminthes and micro-organisms is detected by means of the water level sensor 103 installed on the side wall of the process vessel 1. When too much kitchen garbage has been charged into the process vessel 1 making the aschelminthes and micro-organisms unable to decompose it completely, the water content in the process vessel 1 increases to turn the kitchen garbage in the process vessel 1 into a paste-like condition, wherein adhesion force in the medium 2 increases and the water begins to permeate and accumulate in the circumferential portion which is less influenced by the rotation of the process vessel 1. It has been verified experimentally that the water level in this portion corresponds to the degree of overload of the aschelminthes and micro-organisms, and therefore the degree of overload of the aschelminthes and micro-organisms can be detected by measuring the water level in this portion. When the quantity of kitchen garbage charged into the process vessel 1 increases beyond the processing capacity of the aschelminthes and micro-organisms, and accordingly the result of detection by the water level sensor 103 reaches the upper limit, the result of detection is inputted to the control unit 110 to illuminate a no-supply lamp 111c (see Fig.32) on the display unit 111, giving a warning to the operator not to charge kitchen garbage any more.

The sensor to detect the overload state of the aschelminthes and micro-organisms is not limited to the water level sensor 103 described above, but the odor sensor 107 to detect the odor in the process vessel 1 or the BOD sensor 108 to detect the BOD level in the waste water discharged from the process vessel 1 or the like may be used instead. When the quantity of kitchen garbage in the process vessel 1 increases to impose overload on the aschelminthes and micro-organisms, portion of the kitchen garbage being slow to decompose is put into a condition similar to natural decay, causing ammonia gas, methane gas, butane gas, etc. to fill the inside of the process vessel 1. Because the odor increases in proportion to the quantity of kitchen garbage, namely to the degree of overload of the aschelminthes and micro-organisms, an overload state of the aschelminthes and micro-organisms can be detected by detecting the odor. On the other hand, the overload state of the aschelminthes and micro-organisms leads to an increase in the water contained in the process vessel 1 and to a decreased rate of kitchen garbage decomposition as described previously, thereby causing stale water to mix in the waste water due to the progress of natural decay resulting from the change in the process described above. As a consequence, the BOD level in the discharged water increases and the quantity of stale water increases according to the degree of overload on the aschelminthes and micro-organisms. Thus the degree of overload on the aschelminthes and micro-organisms can be detected by detecting the BOD level. Also because the discharged water changes its color as stale water mixes therein, the degree of overload on the aschelminthes and micro-organisms can also be detected by using an optical sensor which senses the degree of clarity or transparency of the discharged water. When an overload sensor of such a type is used, the no-supply lamp 111c is illuminated to warn the operator to stop charging of the kitchen garbage when the aschelminthes and micro-organisms are over-loaded, as in the case of the water level sensor.

As described above, because a sensor to detect the overload state of the aschelminthes and micro-organisms is installed, a state of incomplete decomposition can be quickly removed to operate the system continuously under stable condition.

In the eighth embodiment, clogging of the drainage port 35 can also be detected based on the result of detection by the water level sensor 103 installed on the side wall of the process vessel 1. By notifying the result of this detection to the operator prompting to clean the drainage port 35, a decrease in the processing capability due to the clogging is prevented and the drainage port 35 is made to be cleaned as necessary. Also by making this notifying operation on condition that the lid 57 is detected to be open, namely that the lid 57 is opened to charge another garbage, a notification is certainly given to the operator.

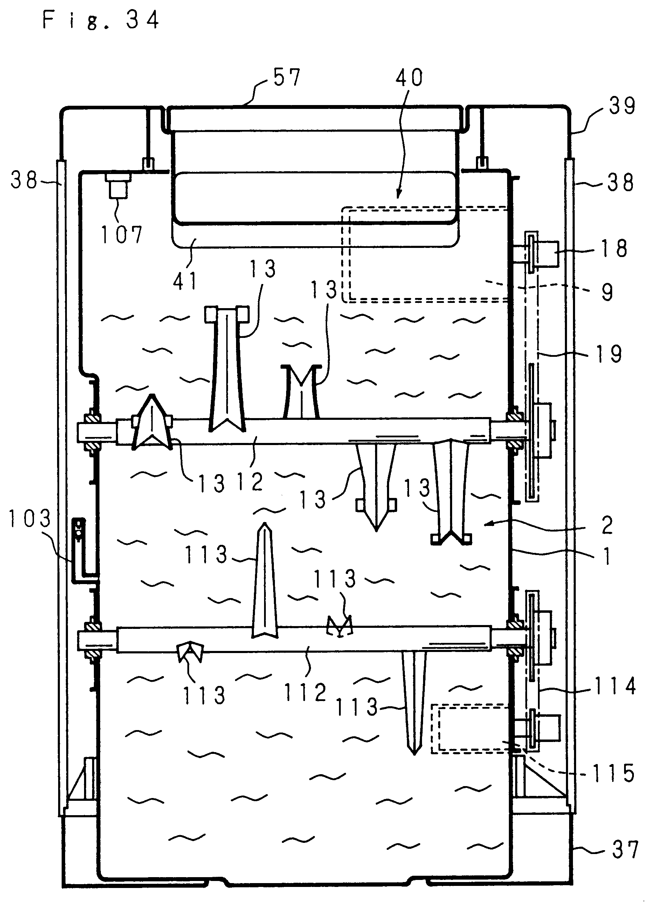

The ninth embodiment of the invention will now be described with reference to Fig.34 through Fig.41. The components identical with those in the first embodiment are assigned the same numerals and description thereof will be omitted.

The process vessel 1 is provided therein with a rotary shaft 112 freely rotatably around substantially horizontal axis positioned below the mixing vanes 13. The rotary shaft 112 has a plurality of vanes 113 protruding outward in radial directions arranged at proper intervals in the axial direction, similarly to the mixing vanes 13 on the rotary shaft 12 of the mixer screw 11. On the other hand, the process vessel 1 is provided with a motor housing section installed at the bottom in the process vessel 1, which houses a motor 115. The output shaft of the motor 115 and the rotary shaft 112 penetrate one side wall of the process vessel 1 to protrude to the outside, and are linked by a chain 114 which is set around thereof.

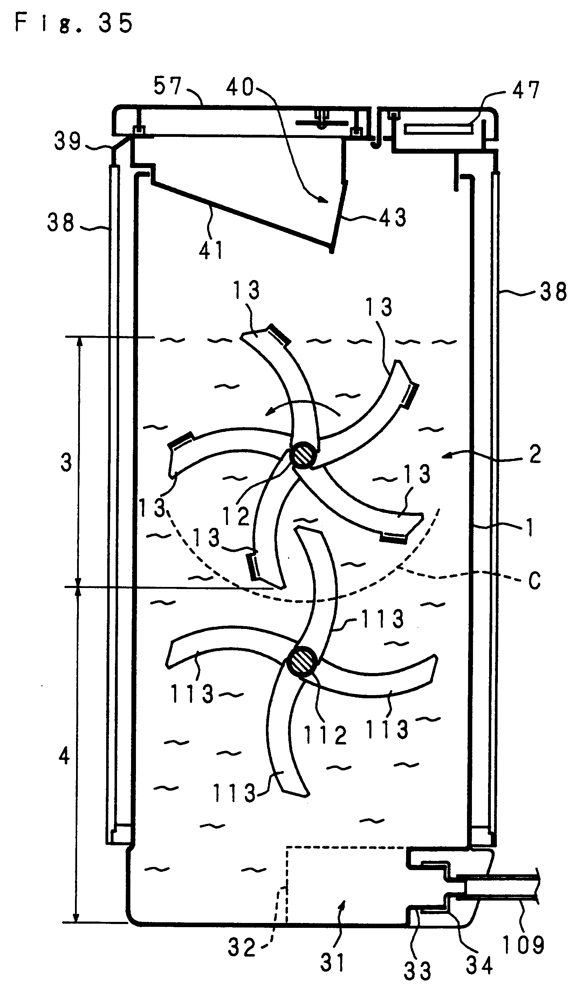

In the above constitution, the vanes 113 mounted, on the rotary shaft 112 protruding therefrom are driven by the driving force of the motor 115 transmitted by the chain 114 to rotate in the medium 2. As shown in Fig.34, the vanes 113 are positioned between the mixing vanes 13 and have such a length as enter the turning area of the mixing vanes 13 by a proper distance as shown in Fig. 35. Thus the rotation of the vanes 113 does not interfere with the mixing vanes 13 and it involves the boundary region between the processing section 3 and the purification section 4.

As the medium 2 is agitated by the rotation of the mixing vanes 13, a solidification layer C of the medium 2 pressed hard is formed a little outside the turning area of the mixing vanes 13. The water charged together with the garbage through the garbage charging port 40 and the water generated by decomposition of the garbage stay on the solidification layer C which serves as a virtual bottom, causing the processing capability to decrease as the inner environment of the process vessel 1 becomes unfavorable.

However, the position where the solidification layer C is formed is in the boundary region between the processing section 3 and the purification section 4, and the rotation area of the vanes 113 arranged as described above includes the boundary region between the processing section 3 and the purification section 4, namely the region where the solidification layer C is formed in the ninth embodiment. Consequently, part of the solidification layer C can be broken by rotating the vanes 113 by means of the motor 115, thereby to eliminate the stagnant water on the solidification layer C as the virtual bottom, making it possible to prevent the environment in the processing section 3 from becoming unfavorable for the reproduction of the aschelminthes and micro-organisms and a decrease in the processing capability caused thereby.

Because the vanes 113 are made to rotate for the purpose of breaking the solidification layer C, it suffices to rotate the vanes 113 once or several turns. While the vanes 113 may be driven to rotate at specified intervals, it is desirable to drive them to rotate when the solidification layer C is formed. In order to make this possible, A water level sensor 103 and an odor sensor 107 similar to those of the eighth embodiment are provided.

When the solidification layer C is formed, the water accumulates in the processing section 3 with the solidification layer C serving as a virtual bottom. The water level sensor 103 detects the water level of the accumulated water, thus detecting the formation of the solidification layer C indirectly. On the other hand, formation of the solidification layer C causes the environment in the processing section 3 to deteriorate due to the accumulation of water, leading to the decay of the garbage distributed in the processing section 3 and accordingly to the generation of odor. The odor sensor 107 detects the odor, thus detecting the formation of the solidification layer C indirectly.

Based on the results of detection by the water level sensor 103 and the odor sensor 107, the motor 115 is made to rotate to drive the vanes 113 to rotate. In this constitution, when the solidification layer C is formed, the vanes 113 is surely made to rotate. While either the water level sensor or the odor sensor may be installed, installation of both sensors will enable it to provide complement in case one of them fails.

Because the solidification layer C is formed due to the mixing operation of the mixing vanes 13, the above arrangement may be replaced with such an arrangement as accumulating the operation time of the mixing vanes 13 and starting the motor 115 to drive the vanes 113 to rotate when the cumulative time researches a specified length. In this case, because the cumulative time is used to predict the formation of the solidification layer C, a cumulative time which indirectly includes the operation time of the mixing vanes 13, such as that including the waiting time after operation of the mixing vanes 13 multiplied by a proper weight factor, as well as the direct operation time of the mixing vanes 13 for the mixing of the medium 2 and the garbage.

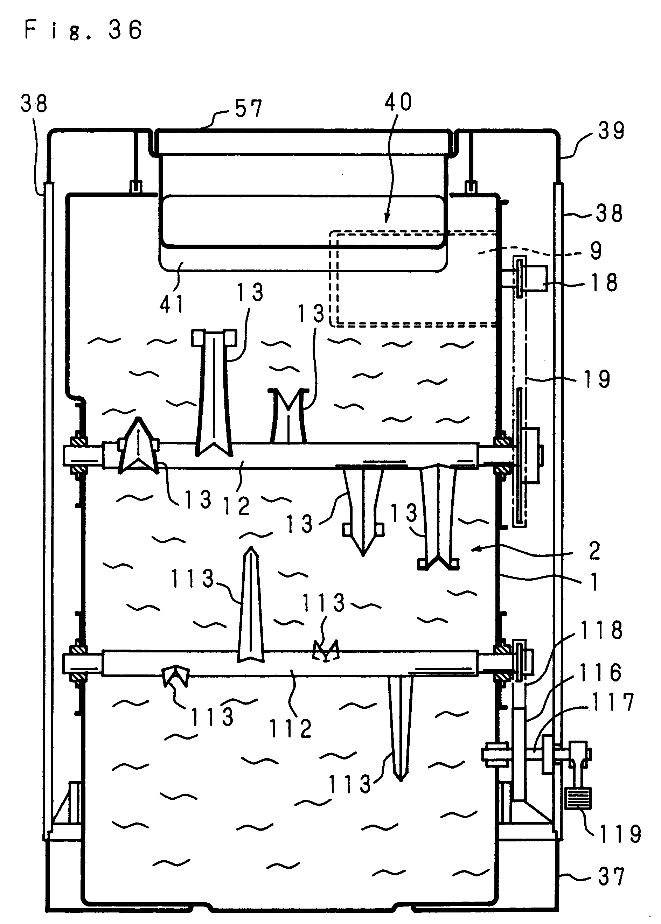

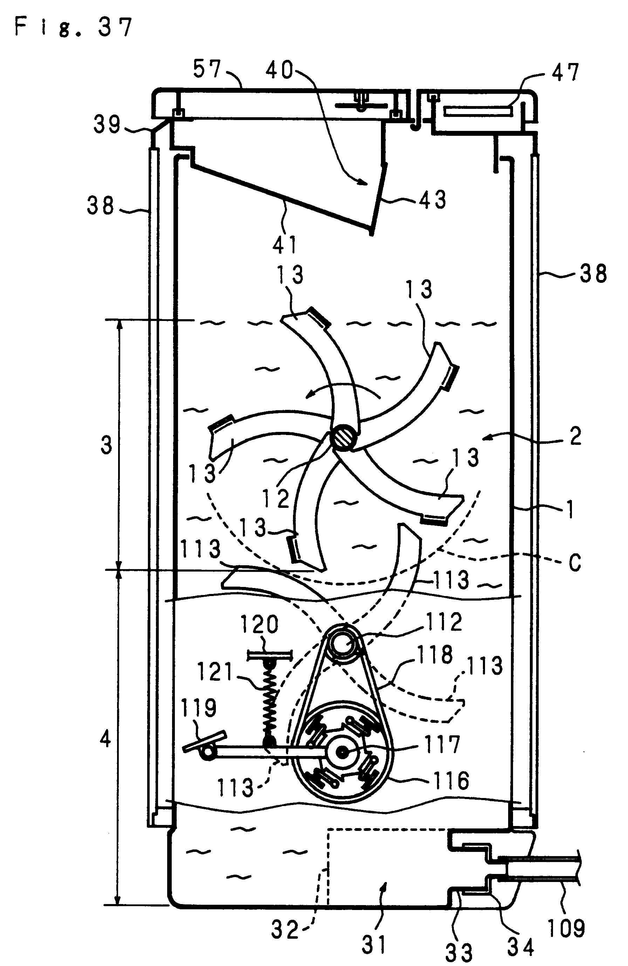

In a variation of the ninth embodiment shown in Fig.36 and Fig.37, an operation shaft 117 is installed to span substantially horizontally between the side wall and the side wall plate 38 of the process vessel 1, below the rotary shaft 112 protruding out of the process vessel 1. The protruding end of the rotary shaft 112 is linked with a oneway clutch 116 mounted in the middle of the operation shaft 117 by a chain 118. The operation shaft 117 extends toward outside of the side wall plate 38, with an operation pedal 119 being fitted to the extended end. An operation means is constituted such that the rotation of the operation shaft 117 caused by depressing the operation pedal 119 downward is transmitted to the rotary shaft 112 via the oneway clutch 116 and the chain 118 thereby to drive the rotary movement of the vanes 113.

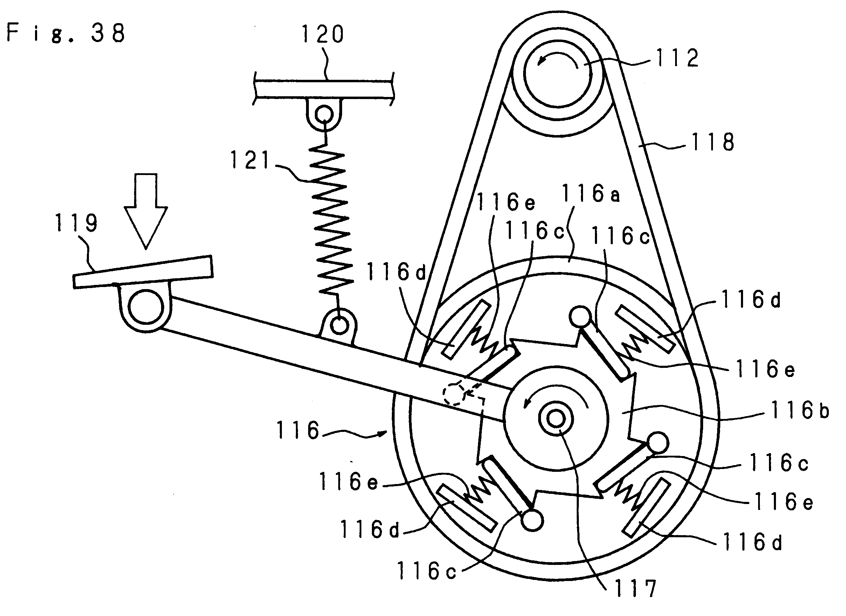

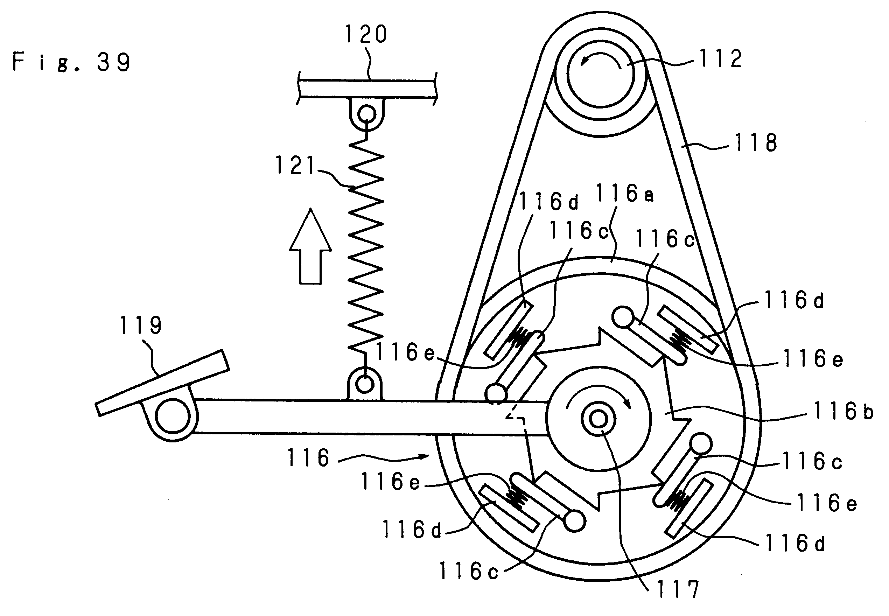

Fig.38 and Fig.39 are drawings explanatory of the operation of the operation means. As shown in these drawings, the oneway clutch 116 is provided with a pawl wheel 116b which can freely rotate and relatively fitted concentrically with the operation shaft 117 inside the outer tube 116a which also serves as a sprocket of the chain 118, while pressure springs 116e interposed between a plurality of locking pieces 116c pivoted at the bases on the side face of the outer tube 116a and pressing pieces 116d fixed on the side face of the outer tube 116a, so that the compressive force of the pressing spring 116e forces the tip of the locking piece 116c toward the circumference of the pawl wheel 116b.

As shown in the drawing, the pawl wheel 116b is provided with a plurality of locking pawls having steps on the same side of the circumferential direction being formed on the periphery. The operation pedal 119 is mounted on the operation shaft 117 in such a manner that the rotation of the operation shaft 117 caused by pressing the operation pedal downward (pedaling operation in the direction indicated by white-inside arrow in Fig.38) works to press the step on the periphery of the pawl wheel 116b which rotates integrally with the operation shaft 117 against the locking pieces 116c. the operation pedal 119 is forced upward by the a tension spring 121 interposed between the middle of a link lever connected to the operation shaft 117 and a bracket 120 fixed on the side wall plate 38, so that the operation pedal 119 after depressing operation returns by the force of the tension spring 121 working in the direction indicated by white-inside arrow in Fig.39, while the operation shaft 117 is forced to rotate in the opposite direction to that of depressing operation.

Rotation of the pawl wheel 116b caused by depressing the operation pedal 119 is transmitted to the outer tube 116a of the oneway clutch 116 via the locking piece 116c, and is transmitted to the rotary shaft 112 linked to the outer tube 116a via a chain 118 as indicated by white-inside arrow in Fig.38. Thus the vanes 113 rotate by a specified angle while the rotation of the pawl wheel 116b due to the return movement of the operation pedal 119 serves, as shown in Fig. 39, only to press the locking piece 116c upward and is not transmitted to the outer tube 116a and the rotary shaft 112.

As shown in Fig.37, the operation pedal 119 is installed at a position where it is easy for the operator to press when charging garbage from the front side (left-hand side in the drawing). Thus by depressing the operation pedal 119 every time the lid 57 is opened and garbage is charged thereby to cause the vanes 113 to rotate, formation of a solidification layer C in the process vessel 1 can be prevented beforehand. Although the foot-operated operation pedal 119 is employed as the operation means to cause the vanes 113 to rotate, other operation means may be employed such as manually operated handle or lever.

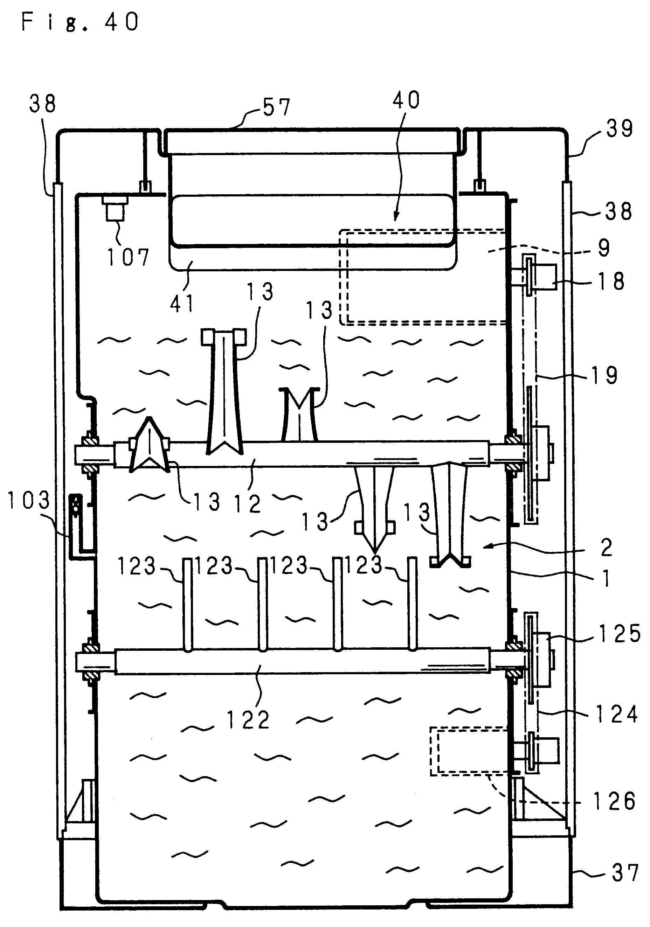

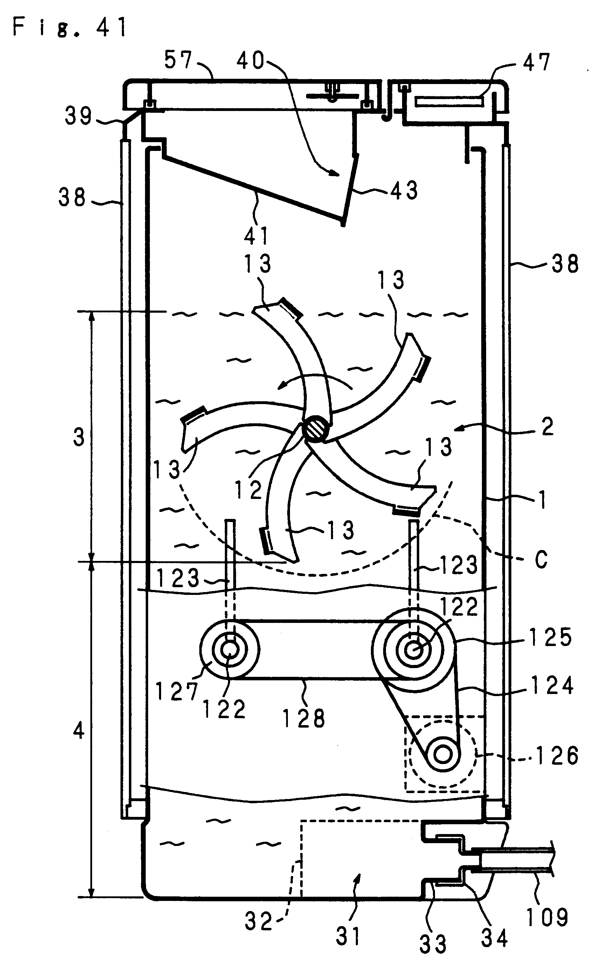

In another variation of the ninth embodiment shown in Fig.40 and Fig.41, a different constitution is provided for the means for breaking the solidification C installed in the boundary portion between the processing section 3 and the purification 4. The breaking means is made in such a constitution that a pair of rotary shafts 122, 122 installed freely rotatably around substantially horizontal axis positioned below the mixing vanes 13 are provided with a plurality of crush bars 123 extending upward arranged at proper intervals in the axial direction, while the rotary shafts 122, 122 are connected to a reversible motor 126 fixed in the lower part of the inner surface of the process vessel 1.

As shown in Fig.41, connection of the rotary shafts 122, 122 to the motor 126 is made by protruding the ends of the rotary shafts 122, 122 on one side out of one side of the process vessel 1, fitting a 2-step sprocket 125 having large and small diameters to the protruding end on one side, fitting a sprocket 127 to another protruding end, setting a chain 128 around a part having smaller diameter of the sprocket 125 and the sprocket 127, and setting a chain 124 between a part having larger diameter of the sprocket 125 and the output end of the motor 126.

As shown in Fig. 40, the positions of protruding the crush bars 123 are set between the mixing vanes 13 and the crush bars 123 have sufficient lengths to reach the solidification layer C formed in the rotation region of the mixing vanes 13. The motor 126 is controlled to rotate clockwise and counterclockwise alternately in a short period of time, so that the rotation of the motor 126 causes the the rotary shafts 122, 122 and accordingly the plurality of crush bars 123 provided to protrude therefrom oscillate by a specified angle thereby breaking the solidification layer C by the oscillation movement thereof.

In the ninth embodiment, because a breaking means is provided in the boundary region between the processing section 3 and the purification section 4, the solidification layer C of the medium 2 formed in the boundary region by the mixing movement of the mixing vanes 13 can be broken as required, thereby keeping the environment in the medium 2 favorable for the reproduction of the aschelminthes and micro-organisms and making it possible to prevent the garbage processing capability from decreasing.

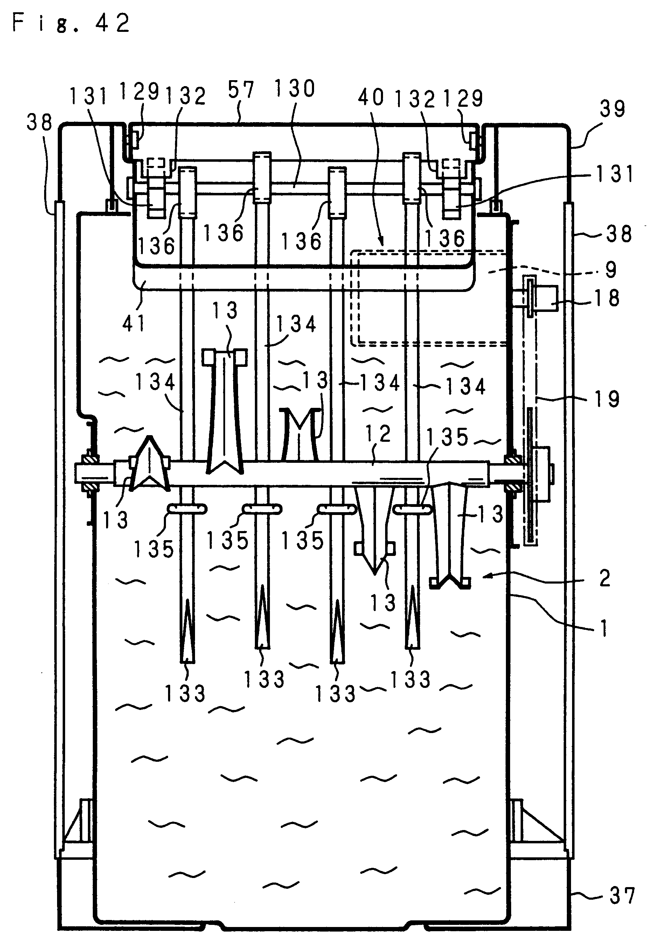

The tenth embodiment of the invention will now be described with reference to Fig.42 through Fig.45. The components identical with those in the first embodiment are assigned the same numerals and description thereof will be omitted.

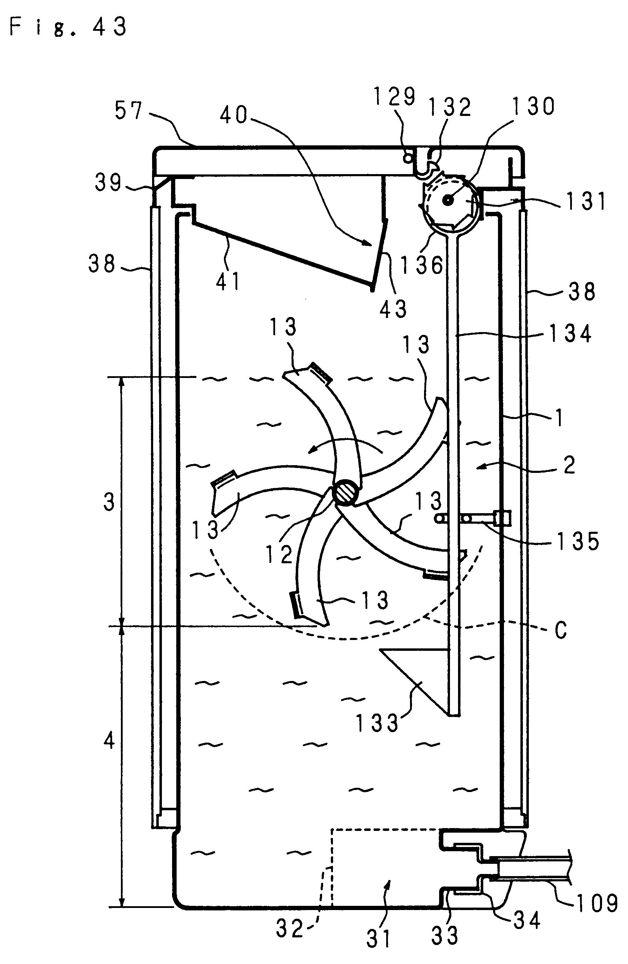

The lid 57 is installed on the top plate 39 by placing the front edge of the top plate 39 on one edge of the lid 57 and hinging on another side with a hinge pin 129, so that the upper part of the slope 41 connecting to the garbage charging port 40 can be opened and closed from the front (left-hand side in Fig.43) by swinging the lid 57 around the hinge pin 129. At the back of the hinged part of the lid 57, a support shaft 130 is installed freely rotatably around a substantially horizontal axis, with a pair of pawl wheels 131, 131 being fitted thereon near both ends. The lid 57 is also provided with a pair of locking projections 132, 132 installed at the back edge thereof to protrude backward, with the installing positions being matched with the positions where the pawl wheels 131, 131 are fitted, respectively, as shown in Fig.42, and the tips of the locking projections 132, 132 which bend like hooks are made to face the periphery of the respective pawl wheels 131, 131 as shown in Fig.43.

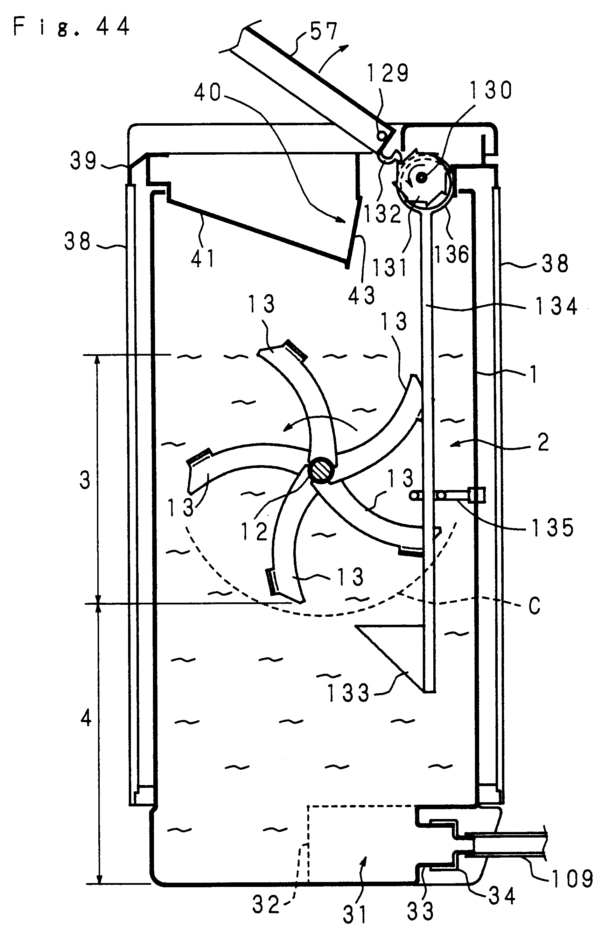

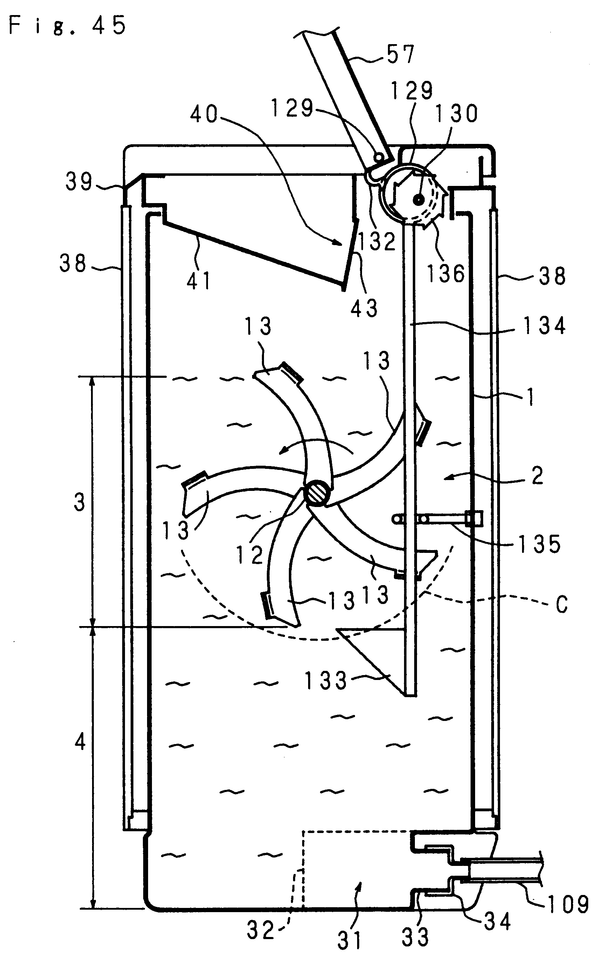

Fig.44 and Fig.45 show the process of opening the lid 57. When the lid 57 is opened, the locking projection 132 protruding from the back edge of the lid 57 also swings downward around the hinge pin 129 and, when the lid 57 reaches a specified swing angle, locks with a pawl on the periphery of the pawl wheel 131. When the lid 57 is operated further under this condition, rotating force is transmitted via the pawl locking with the locking projection 132 to the pawl wheel 131 to cause the pawl wheel 131 and the support shaft 130 to rotate in the direction indicated by the arrow in Fig.44.

Fig.45 shows the lid 57 being fully open, under which condition the engagement of the locking projection 132 and the pawl wheel 131 is released. That is, the engagement of the locking projection 132 and the pawl wheel 131 is made while the lid 57 is in a specified range of swing angle in the course of proceeding from full-closed to full-open condition, and the support shaft 130 rotates in one direction by a specified angle every time the lid 57 is opened.

A plurality of crush plates 133 are arranged in the process vessel 1. The crush plates 133 have triangular shapes when viewed sideways as shown in Fig.43 and acutely angled top edges as shown in Fig.42, and are fixed at the tips of respective support rods 134, being embedded in the medium 2 to position a little below the mixing vanes 13. The support rods 134 which support the crush plates 133 are supported at the middle thereof by respective support brackets 135 installed on the back wall of the process vessel 1 to protrude therefrom, and extend to the region above the medium 2. The extended ends are linked with the support shaft 130 via respective cam rings 136 which have eccentric cams being incorporated therein.

Thus the support rods 134 are supported by the support shaft 130 to suspend downward and are inserted through the support brackets 135 to be restrained to rotate around the support shaft 130. When the support shaft 130 rotates, the crush plates 133 at the bottom of the support rods 134 move vertically over specified strokes according to the eccentricity of the respective cam ring 136 with respect to the support shaft 130. As shown in Fig.42, the crush plates 133 are positioned between the mixing vanes 13 at such a height that the tip thereof enter the rotation region of the mixing vanes 13 when moving up as shown in Fig.45.

The vertical movement of the crush plates 133 is carried out in the boundary region between the processing section 3 and the purification section 4 without interfering with the mixing vanes 13, according to the rotation of the support shaft 130 which is caused in mechanical linkage with the open/close operation of the lid 57.

In the tenth embodiment, the vertical movement of the crush plate 133 takes place in the boundary region between the processing section 3 and the purification section 4, namely in a space including the solidification layer C forming position, and the vertical movement of the crush plate 133 breaks part of the solidification layer C. As a result, accumulation of water on the solidification layer C as a virtual bottom can be removed so that the deterioration of the environment for the reproduction of the aschelminthes and micro-organisms in the processing section 3 and the decrease in the processing capability caused thereby can be prevented similarly to the ninth embodiment. The vertical movement of the crush plates 133 is caused in mechanical linkage with the open/close operation of the lid 57 which is carried out reliably when garbage is charged into the process vessel 1. Consequently, breakage of the solidification layer C by the crush plates 133 is surely carried out thereby to maintain the environment in the processing section 3 always favorable for the reproduction of the micro-organisms.

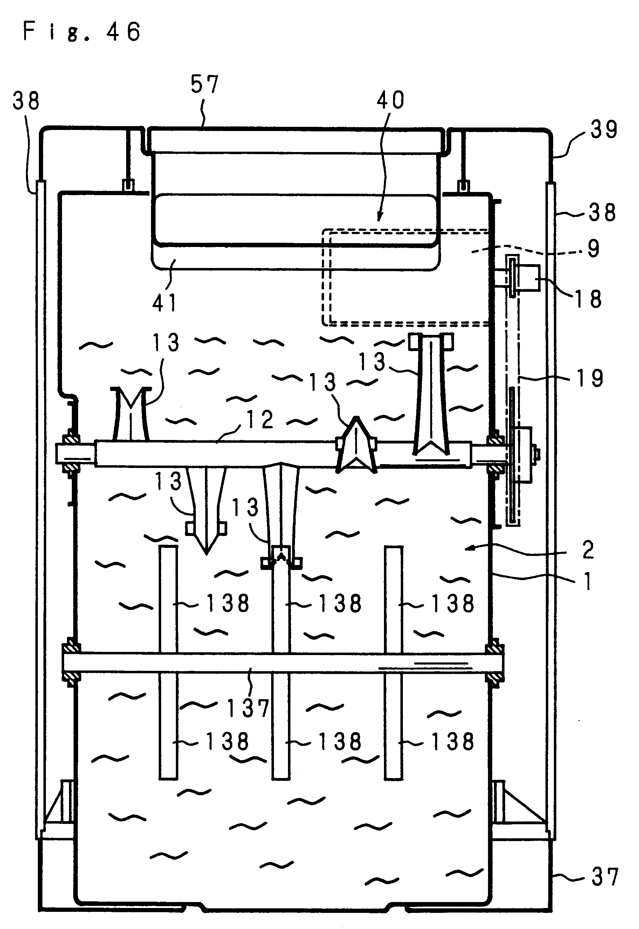

The eleventh embodiment of the invention will now be described with reference to Fig.46 through Fig.50. The components identical with those in the first embodiment are assigned the same numerals and description thereof will be omitted.

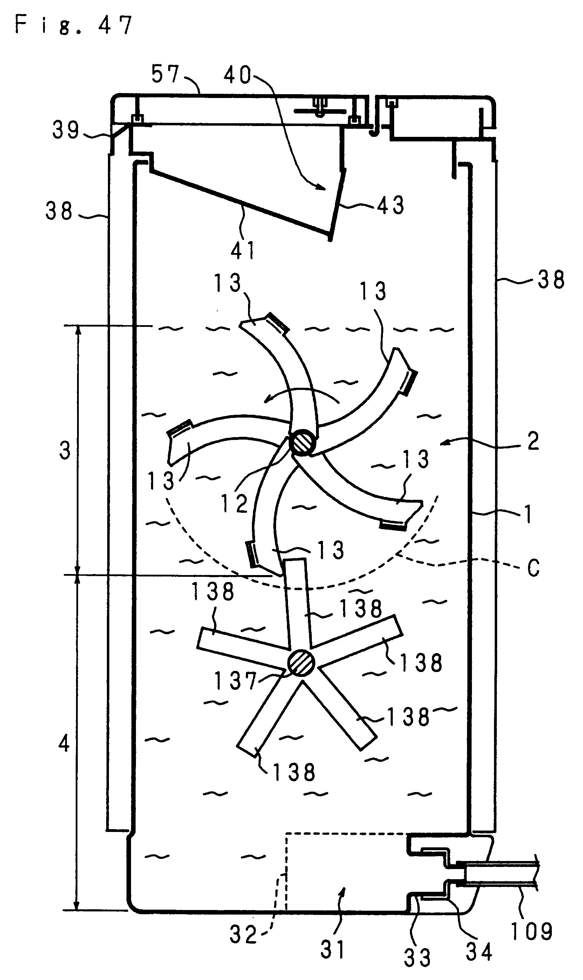

A rotary shaft 137 installed freely rotatably around substantially horizontal axis positioned below the mixing vanes 13 in the process vessel 1. The rotary shaft 137 has a plurality of crush plates 138 mounted at equal intervals along the axis thereon protruding radially. The crush plates 138 have such lengths that they enter the rotation region of the mixing vanes 13 by a proper length as shown in Fig.47. The positions of installing the crush plates 138 are arranged in such a manner that only one set located at the middle are matched with the mixing vane 13 mounted at the middle of the rotary shaft 12 while other sets of the crush plates are positioned between the mixing vanes 13, as shown in Fig.46. Although this example shows a case of installing five crush plates 138 shown in Fig.47 at each of three positions along the axis of the rotary shaft 137 as shown in Fig.46, the positions of installing the crush plates 138 and the number of crush plates provided at each position may be properly changed.

When the mixing vanes 13 are driven to rotate by the force transmitted from the motor 9, the mixing vanes 13 located at the middle come into contact with one of the five crush plates 138 which is in a position matching therewith. Thus the rotating force is transmitted via the crush plate 138 to the rotary shaft 137, so that all the crush plates 138 mounted on the rotary shaft 137 rotate in the boundary region between the processing section 3 and the purification section 4. Because the contact between the mixing vane 13 and the crush plate 138 takes place only in part of the the crush plates 138 rotates by a specified angle for every turn of the mixing vanes 13, so that, in case the number of crush plates 138 is five as shown in Fig.47, the crush plates make one turn as the mixing vanes 13 make five turns.

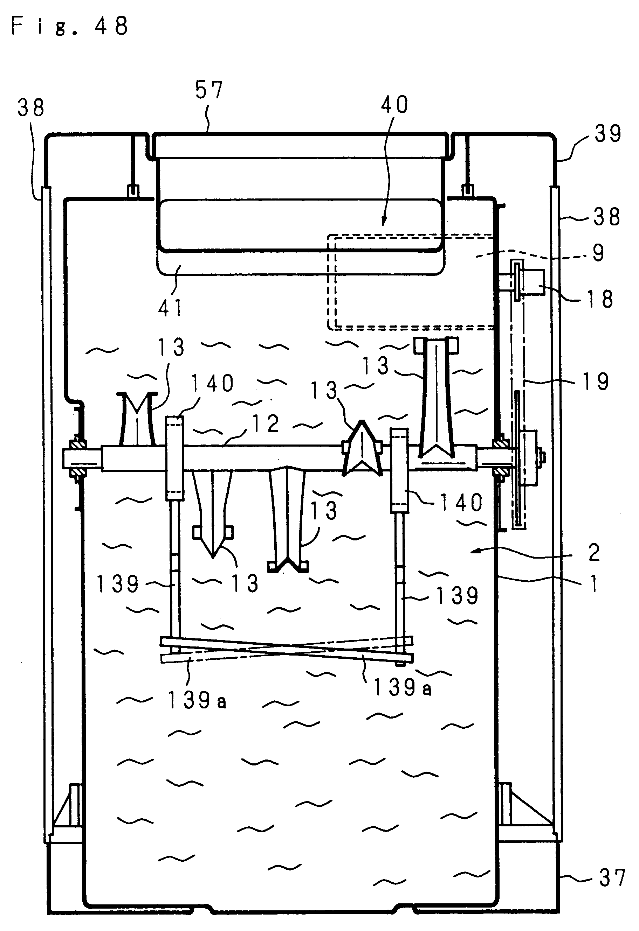

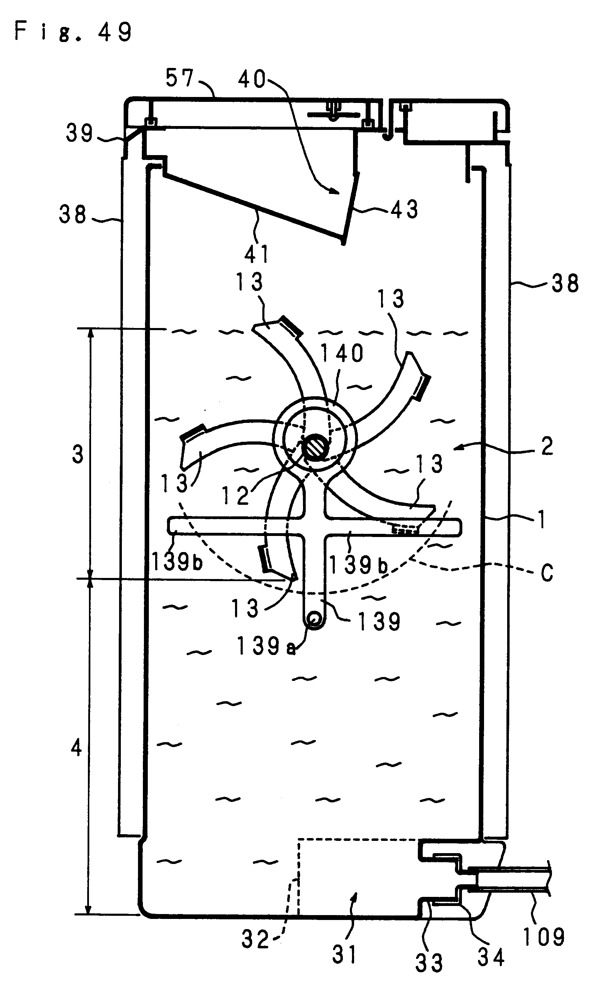

In a variation of the eleventh embodiment shown in Fig.48 and Fig.49, the breaking means is made in a different constitution. In this example, a pair of crush bodies 139, 139 directly supported by the rotary shaft 12 are provided as the means of crushing the solidification layer C. These crush bodies 139, 139 are supported to suspend downward via respective cam rings 140, 140 which incorporate eccentric cams therein in such positions where they do not interfere with the mixing vanes 13. The bottom ends of the crushers are connected to each other by a linkage lever 139a as shown in Fig.48 and crusher bars 139b, 139b are provided in the middle to protrude toward both sides as shown in Fig. 49, which penetrate the solidification layer C formed in the boundary region between the processing section 3 and the purification section 4, while the linkage lever 139a is positioned in the vicinity of the boundary region.

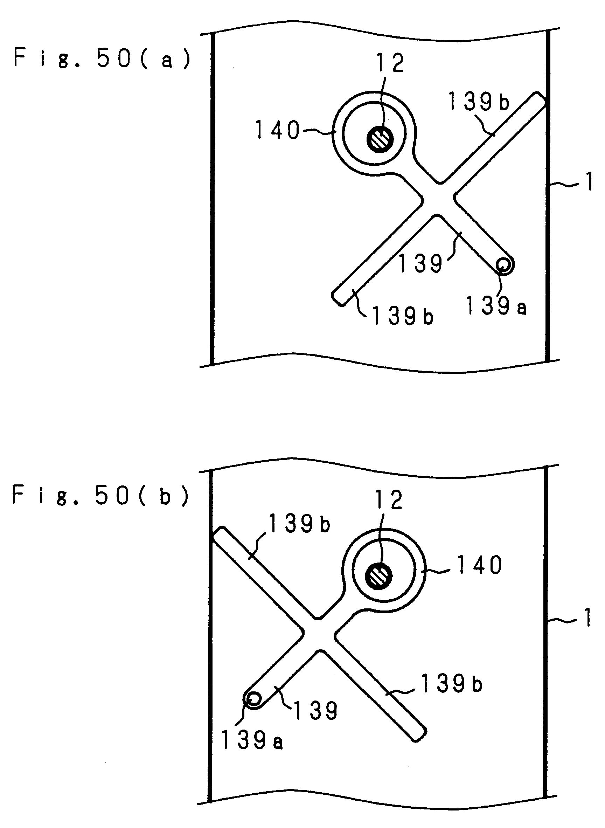

As the mixing vanes 13 rotate, the crush bodies 139, 139 move up and down according to the eccentricity of the respective cam rings 140, 140 with respect to the rotary shaft 12 and rotate around the axis of the rotary shaft 12 while thrusting aside the medium 2 in the way. This rotation movement is restricted by the contact of the tip of one of the crusher rods 139b, 139b with the inner wall of the process vessel 1 as shown in Fig.50 (a) and (b). As a consequence, the crush body 139 inclines around the rotary shaft 12 in mechanical linkage with the rotation of the mixing vanes 13 while oscillating in the radial direction in the boundary region between the processing section 3 and the purification section 4, and the solidification layer C formed in the boundary region between the processing section 3 and the purification section 4 is broken by the crusher rods 139b, 139b installed on the crush bodies 139, 139 protruding therefrom. Because the above movement is carried out along the circular track of the rotating mixing vanes 13 where the solidification layer C is formed, the solidification layer C can be effectively broken without making no significant influence on the environment of the purification section 4.

In the eleventh embodiment, the solidification layer C formed in the boundary region between the processing section 3 and the purification section 4 can be broken by the crushing movement of the crusher plate 138 (or the crush 139) similarly to the embodiments 9 and 10, and the deterioration of the environment for the reproduction of the aschelminthes and micro-organisms in the processing section 3 and the decrease in the processing capability caused thereby can be prevented. While breaking operation of the crusher plate 138 (or the crush body 139) is made in mechanical linkage with the rotation of the mixing vanes 13, the mixing vanes 13 are surely driven to rotate to mix the garbage and the medium 2 when the garbage is charged into the process vessel 1. Consequently, breakage of the solidification layer C by the rotation of the crusher plate 138 (or the crush body 139) is reliably carried out every time the garbage is charged, thereby maintaining the environment in the processing section 3 always favorable for the reproduction of the aschelminthes and micro-organisms.

The crushing means in the ninth through eleventh embodiments described above are not limited to the constitutions described for the respective embodiments, but may be of any other constitution which is capable of making an action to break the solidification layer C in the boundary region. It should be noticed, however, that the purpose of the crushing means is to break the solidification layer C and excessive actions of the crushing means may have adverse effect on the anaerobic environment in the processing section 4.

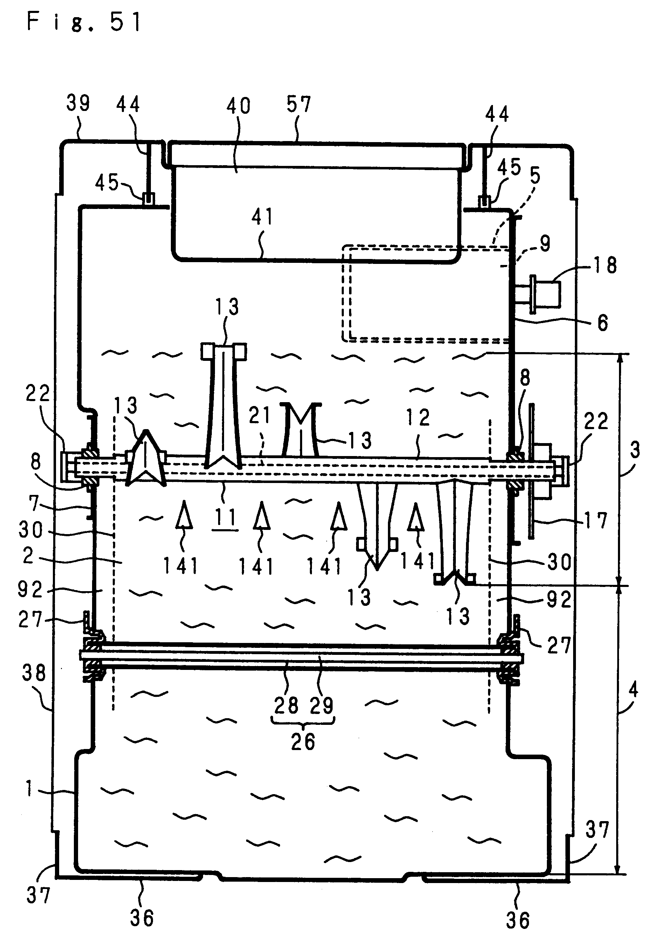

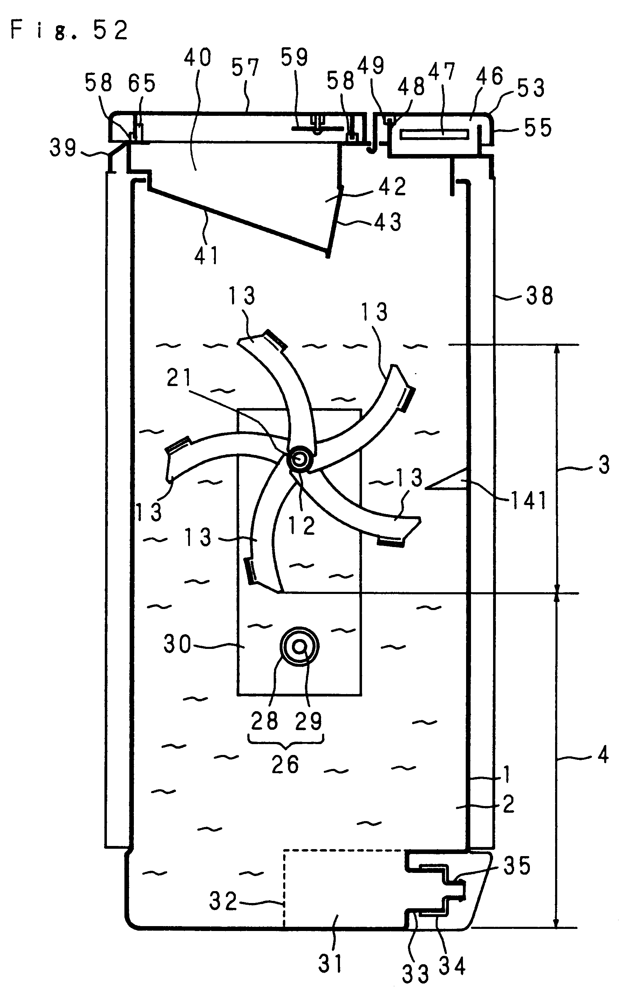

The twelfth embodiment of the invention will now be described with reference to Fig.51 and Fig.52. The components identical with those in the first embodiment are assigned the same numerals and description thereof will be omitted.

In Fig.51 and Fig.52, the inner surface of the side faces of the process vessel 1 have fixed teeth 141 formed by cutting in a stainless steel sheet and raising pieces therefrom. The fixed teeth 141 extend near the mixing vanes 13 so that the garbage is ground between the fixed teeth and the mixing vanes 13. Specifically, when the mixer screw 11 rotates in the direction indicated by the arrow of dashed line shown in Fig.5, the mixing vanes 13 mix the garbage and the medium 2 by pressing them in the circumferential direction, while grinding the garbage by squeezing it between the mixing vanes 13 and the fixed teeth 141 and between the tips of the mixing vanes 13 and the side wall of the process vessel 1.

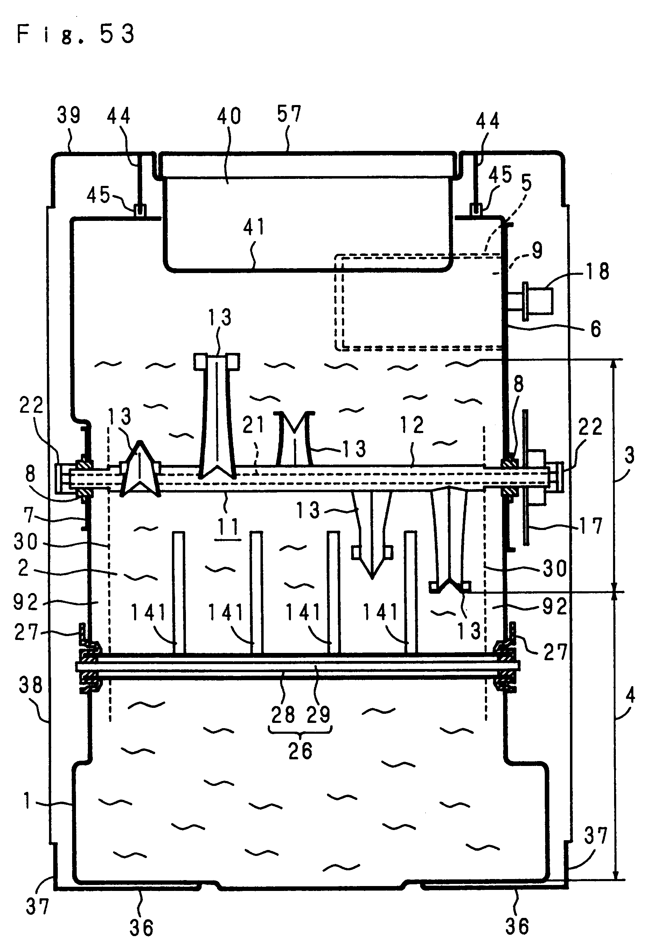

A variation of the twelfth embodiment will now be described with reference to Fig.53. In this example, the fixed teeth 141 made of a heat-conductive material are provided on the pipe 28 of the second heating section 26. In this constitution, it is possible to transmit the heat from the second heating section 26 effectively to the entire medium 2 and heat the medium 2 uniformly thereby to improve the garbage decomposing capability, by utilizing the fixed teeth 141 which grind the garbage with the mixer screw 11.

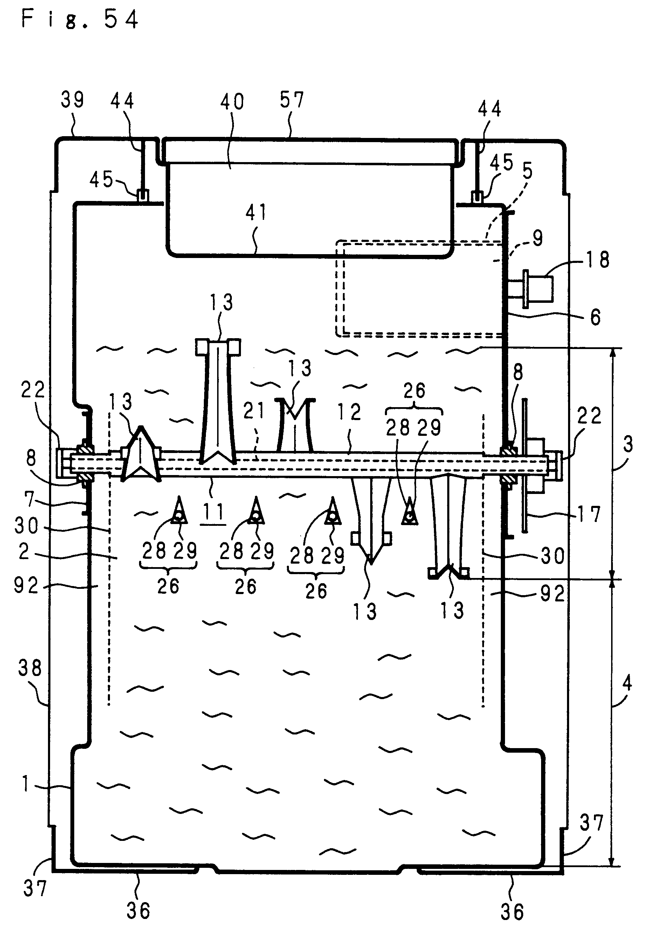

Another variation of the twelfth embodiment will be described below with reference to Fig.54. In this example, the second heating section 26 is arranged between the mixing vanes 13 of the mixer screw 11 in a direction substantially perpendicular to the rotary shaft 12, with the pipes 28 of the second heating section 26 serving as the fixed teeth. As the mixer screw 11 rotates, although the medium 2 and the garbage are forced to move toward the circumference and the garbage is ground also between the process vessel 1 and the mixer screw 11 thereby pressure is imparted to the side wall of the process vessel 1, the pipes 28 of the second heating section 26 are installed to span the side walls of the process vessel 1 to prevent the process vessel 1 from deforming and breaking.

According to the twelfth embodiment, because the garbage is ground between the mixer screw 11 and the fixed teeth 141, the garbage can be decomposed in a short period of time in a simple constitution, thereby improving the efficiency of garbage decomposition.

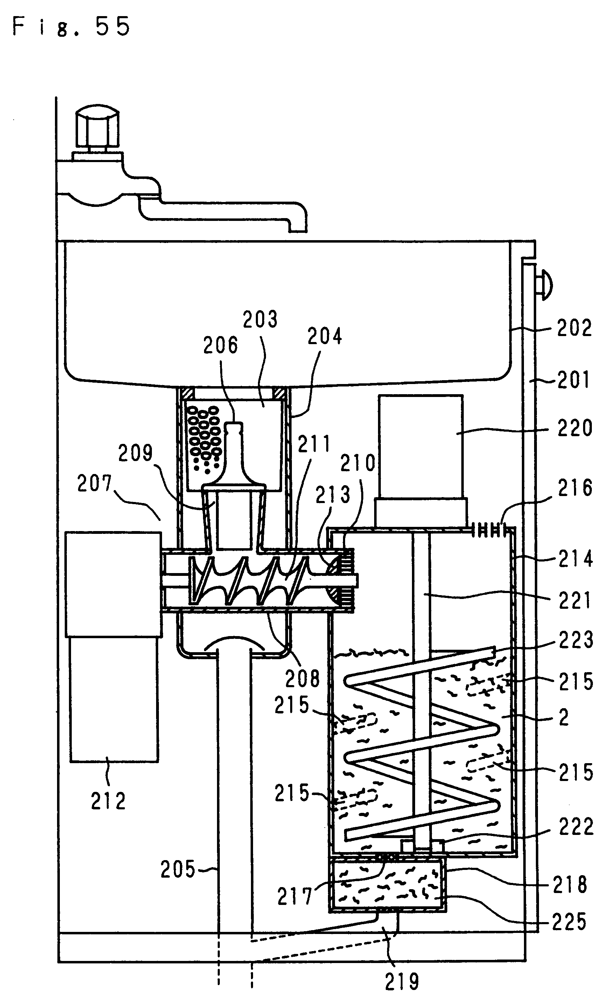

The thirteenth embodiment of the invention will now be described below with reference to Fig.55 through Fig.58.

In Fig.55, numeral 201 denotes a sink cabinet which houses a sink 202, having a garbage receiving section 204 wherein a drain basket 203 is detachably housed at the bottom, being installed therein. The bottom of the garbage receiving section 204 receives a drainage pipe 205 connected thereto, and the drain basket 203 and the garbage receiving section 204 have openings formed in the bottoms thereof to communicate with a material charging port 209 of a grinder 207. A material thrust rod 206, which is inserted into the material charging port 209 of the grinder 207 through the bottom openings of the drain basket 203 and of the garbage receiving section 204, is provided in the garbage receiving section 204. During kitchen work, the opening in the drain basket 203 is blocked by the material thrust rod 206 to prevent water from the sink 202 from flowing into the material charging port 209 of the grinder 207. The grinder 207 is housed in the space below the sink cabinet 201, and the material charging port 209 of a transfer tube 208 is connected to the opening of the garbage receiving section 204 with fixed teeth 210 being installed at the tip thereof. A screw 211 driven to rotate by a motor 212 is installed in he transfer tube 218. The screw 211 has a rotary teeth 213 at the tip thereof and rotates to move the garbage charged through the material charging port 209 toward the tip, thereby to crush the garbage by means of the rotary teeth 213 and the fixed teeth 210.

A process vessel 214 formed with corrosion-resistant material such as synthetic resin or stainless steel is installed, with the tip of the transfer tube 208 of the grinder 207 being made to face the inside thereof. the process vessel 214 has a plurality of ribs 215 formed therein to protrude toward the inside. The process vessel 214 has a vent hole 216 formed in the top face thereof and a drainage port 217 formed in the bottom thereof. the drainage port 217 is connected to the drainage pipe 205 via a purification vessel 218 and a drainage pipe 219, with the drainage port 217 having a filter installed therein to prevent drainage of the medium 2.

A motor 220 is fixed on the top face of the process vessel 214 with a rotary shaft 221 thereof being extended into the process vessel 214, with the bottom end of the rotary shaft 221 being supported by a bearing 222 installed at the bottom of the process vessel 214. The rotary shaft 221 of the motor 220 has a mixer screw 223 formed in helical configuration being fixed thereon. The rotary shaft 221 and the mixer screw 223 are made of corrosion-resistant material such as synthetic resin or stainless steel, or are coated with a film of corrosion-resistant material such as synthetic resin on the surface thereof. The process vessel 214 contains a medium 2 similar to that of the first embodiment. The purification vessel 218 contains a filtering material 225 such as the medium 2, activated carbon and a membrane made of hollow threads.

During kitchen work, the opening in the drain basket 203 is blocked by inserting the material thrust rod 206 into the material charging port 209. Under this condition, water from the sink 202 is discharged via the drain basket 203 into the drainage pipe 205. To dispose of garbage, the material thrust rod 206 is pulled out and an operation switch not shown in the drawing is operated to start the motor 212 and rotate the screw 211, while charging the garbage by means of the material thrust rod 206 through the openings of the drain basket 203 and the garbage receiving section 204 into the material charging port 209. The garbage charged through the material charging port 209 into the grinder 207 is transferred by the screw 211 to the tip of transfer tube 208 where it is ground by the fixed teeth 210 and the rotary teeth 213 and discharged into the process vessel 214.

In synchronization with the start of the motor 212 of the grinder 207, the motor 220 starts to drive the mixer screw 223 at the same time. Consequently, even if the garbage left over in the previous processing operation remains near the position of discharging from the grinder 207, the mixer screw 223 starts to rotate at the same time the grinder 207 starts to run so that the garbage near the discharging position from the grinder 207 is mixed with the medium 2 before the new garbage is discharged from the grinder 207 into the process vessel 214, and consequently the garbage will never concentrate locally in the process vessel 214 thus improving the efficiency of processing.

When charging of the garbage into the material charging port 209 is completed, the operation switch not shown in the drawing is operated. Upon lapse of a period of time long enough to discharge the garbage in the grinder 207 into the process vessel 214 after the operation switch has been operated, the motor 212 of the grinder 207 is stopped, in order to prevent the garbage from remaining in the grinder 207 and rotting therein. After the motor 212 of the grinder 207 was stopped, the motor 220 of the mixer screw 223 is stopped in a specified period of time so that the garbage discharged from the grinder 207 and the medium 2 are mixed sufficiently.

The garbage in the process vessel 214 is decomposed to disappear as in the case of the first embodiment. Because the garbage supplied to the process vessel 214 has been crushed by the grinder 207, it is decomposed and disappears in a relatively short period of time. The water generated in the garbage decomposition process and the water charged into the process vessel 214 together with the garbage are discharged through the drainage port 217 into the purification vessel 218 where it is purified by the filtering material 225 in the purification vessel 218, and is discharged into the drainage pipe 205 through the drainage pipe 219.

Although the motor 220 is started to drive the mixer screw 223 at the same time the motor 212 of the grinder 207 is started in synchronization in this example, the motor 220 of the mixer screw 223 may also be started in a specified period of time required for the garbage charged through the material charging port 209 of the grinder 207 into the grinder 207 is discharged from the grinder 207 into the process vessel 214, after the motor 212 of the grinder 207 started operation. In this constitution, the operation time of the motor 220 can be shortened to reduce the energy loss. The grinder 207 may also be made in such a constitution as the front end thereof is directed upward so that water accumulates in the grinder 207, in order to prevent odor in the process vessel 214 from leaking to the sink 202 due to the water in the grinder 207.

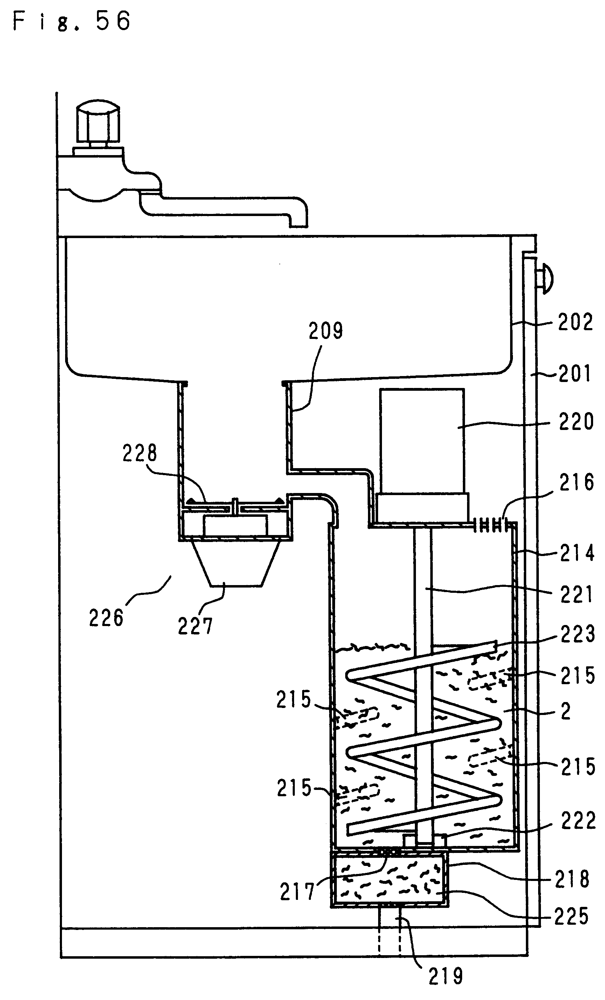

Although the grinder 207 is constituted of the transfer tube 208, the screw 211, the fixed teeth 210, the rotary teeth 213, and the motor 212 for driving the screw 211 and the rotary teeth 213 to rotate in this example, a grinder 226 may also be constituted of a cutter 228 which is driven to rotate at a high speed by a motor 227, as a variation shown in Fig. 56, so that the garbage ground by centrifugal force generated by the cutter 228 is discharged into the process vessel 214. In this constitution, the process vessel 214 is started at the same time the grinder 226 is started to operate.

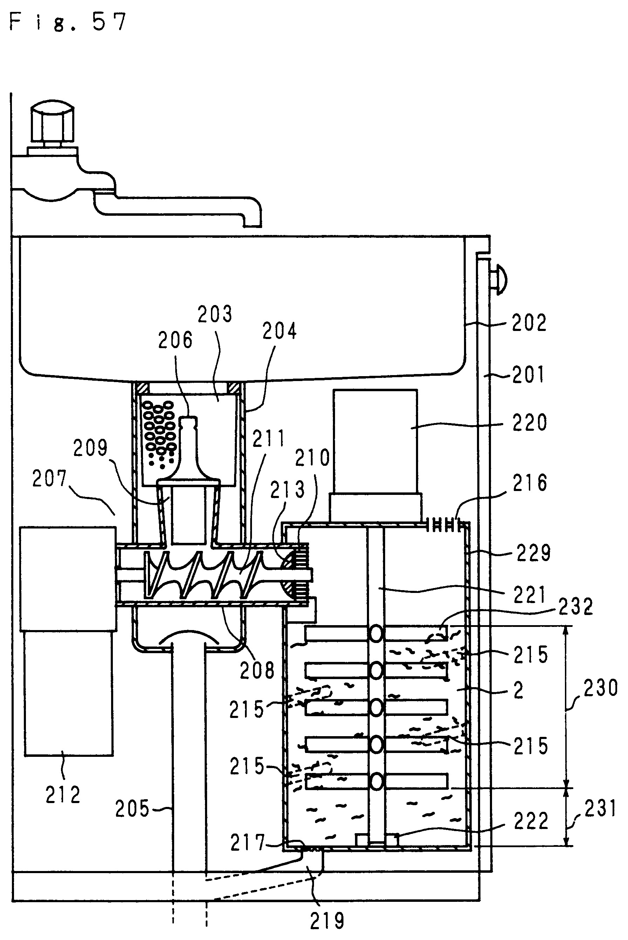

Now another variation of the thirteenth embodiment will be described below with reference to Fig.57. The components identical with those in the first embodiment are assigned the same numerals and description thereof will be omitted. A process vessel 229 formed with corrosion-resistant material such as synthetic resin or stainless steel is installed with the tip of the transfer tube 208 of the grinder 207 being made to face the inside thereof. The process vessel 229 has a processing section 230 wherein a mixer screw 232 to be described later is located and a purification section 231 wherein the mixer screw 232 is not located which is positioned below the processing section 230 being formed therein. The rotary shaft 221 of the motor 220 has a plurality of mixer screws 232 protruding radially therefrom.

In the constitution of the variation shown in Fig.57, the garbage discharged into the process vessel 229 is mixed with the medium 2 by the rotation of the mixer screw 232 in the processing section 230, to be decomposed and disappear. The water discharged into the process vessel 229 together with the garbage and the water generated in the garbage decomposition process are purified by the medium 2 in the purification section 231, and is discharged through the drainage pipe 219 into the drainage pipe 205.

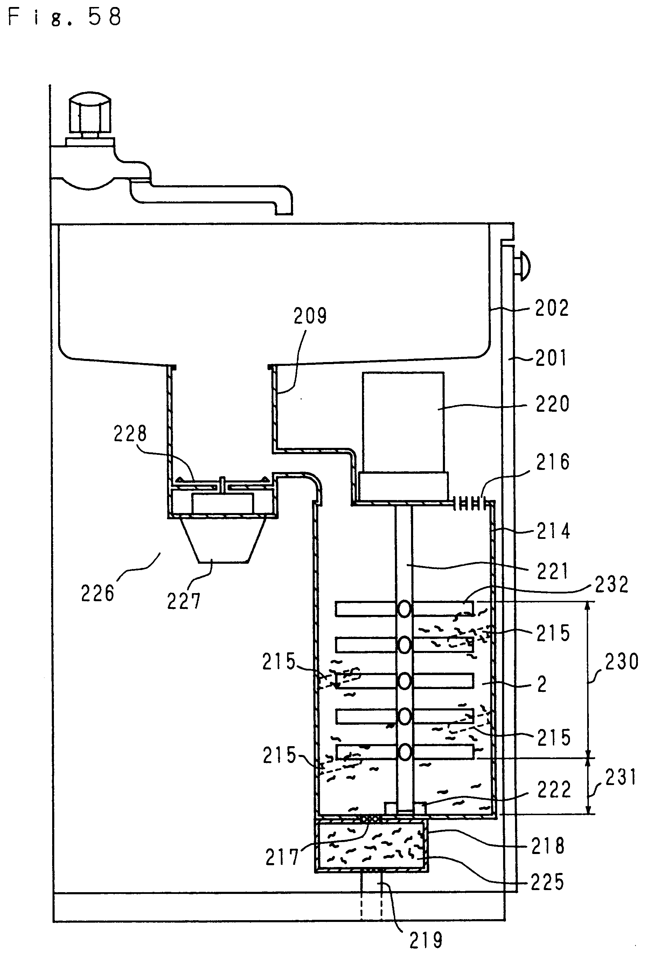

The constitution may also be modified such as the water discharged from the purification section 231 of the process vessel 229 is purified in the purification vessel 218 as a variation shown in Fig.58.

According to the thirteenth embodiment, because the garbage which has been ground by the grinder is charged into the process vessel, the garbage can be decomposed in a relatively short period of time in the process vessel, thereby eliminating the trouble of disposing of the garbage. Also the installation of the purification vessel communicating with the process vessel enables it to purify the discharged water which has been processed thereby contributing to the environment conservation.

It is also a matter of course that a grinder can be installed prior to the process vessel so that ground garbage is charged into the process vessel in any of the first through the twelfth embodiments, as in the case of the thirteenth embodiment.

The process of disposing of the garbage in the process vessel proceeds as described above by the philodina, diplogaster and protozoa decomposing the garbage mainly in the processing section with the intermediate products being further decomposed into inorganic waste and purified by bacteria mainly in the purification section. The relation between the volumes of the processing section and the purification section in the process vessel will be described below.

Increasing the volume of the purification section enables it to carry out the decomposition process of the intermediate products from the processing section into inorganic products which is done by bacteria completely. Thus the water discharged from the purification section hardly includes the intermediate products which remain without being decomposed, so that the regulations on the suspended materials and BOD level in the water discharged into sewerage can be satisfied with enough margin. Leakage of odor to the atmosphere is also prevented, and the system of the invention can be used in ordinary urban homes or collective residential buildings.

On the other hand, the processing capacity of the garbage decomposition is determined by the capacity of the philodina, diplogaster and protozoa reproducing in the process vessel (processing section) to decompose organic waste. Therefore the volume of the processing section must be large enough to provide a specified processing capability.

Although the processing section and the purification section are desirable to have larger capacity, it leads to increased size of the organic waste disposal system which is difficult to install in a limited area. For this reason, the organic kitchen garbage disposal system is to be built by selecting appropriate relation of the capacity between the processing section and the purification section (which is to be made larger) in consideration of the quantity and contents of the garbage to be disposed.

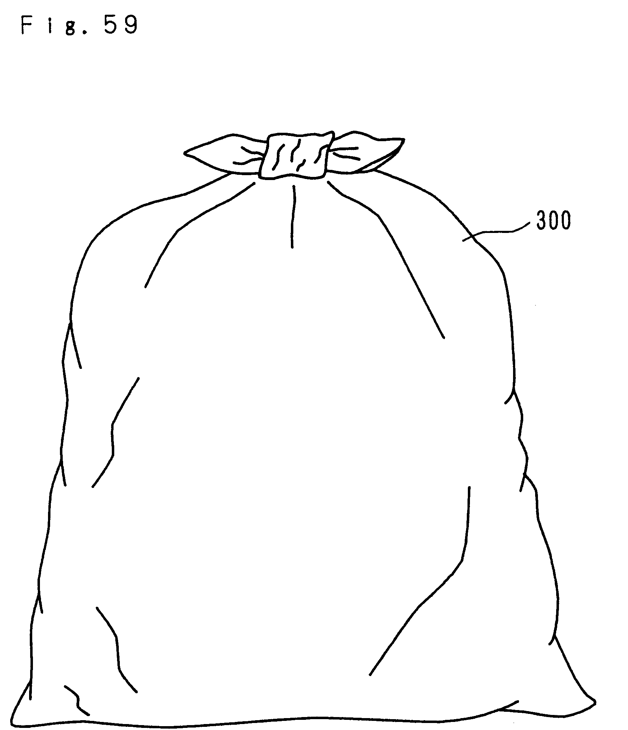

Although only garbage is processed in the above embodiments, bags containing garbage can be processed if the bags are made of a material which can be decomposed by aschelminthes and micro-organisms cultivated in the process vessel. Fig.59 shows a garbage container bag 300 made of a biodegradable material such as one based on a cellulose derivative, chitin and other natural polysaccharides, natural fibers, reproduced natural fibers, synthesized high polymers of caprolactam, polyethylene succinate or the like, or natural high polymers such as hydroxybutyrate. The biodegradable materials are decomposed by enzymes secreted by micro-organisms to the outside of their bodies, and eventually turned into water and carbon dioxide.

Thus when disposing of garbage, the garbage is packed in the bag 300 made of a biodegradable material and is, for example, charged into the process vessel 1 through the garbage charging port 40 by opening the lid 57 of the organic waste disposal system shown in Fig.1. When charging of the garbage is completed, the lid 57 is closed and a processing operation is started. The motor 9 repeats the forward and reverse rotations for a specified period of time to break and grind the bag 300 and the garbage by the mixer screw 11 and mixes them with the medium 2. Then the bag 300 and the garbage are decomposed in a process similar to that of the first embodiment.

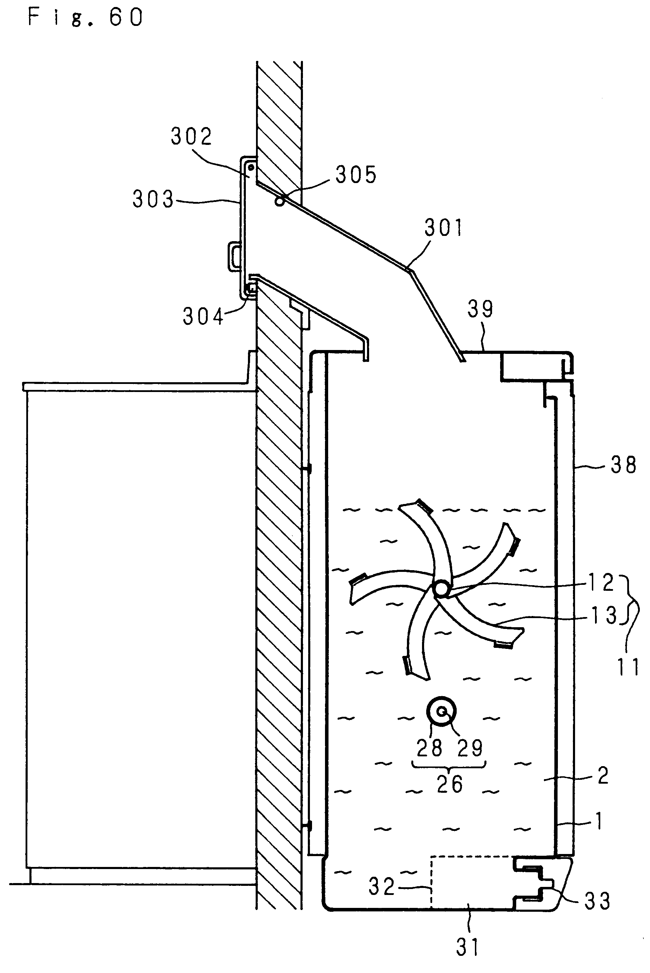

The fourteenth embodiment of the invention where the garbage is processed as packaged in bags will be described below with reference to Fig.60. The components identical with those in the first embodiment are assigned the same numerals and description thereof will be omitted.

Numeral 301 denotes a dump duct which faces the process vessel 1 by penetrating the top plate 39 on one end, and penetrates a wall of the building with an opening on the other end thereof facing upward a little above a sink cabinet, so that this opening in the building serves as a charging port 302. The dump duct 301 is made of a low-friction material such as olefin resin or high-density polyethylene, or otherwise the duct may be made of a plastic material or a metal with the inside being coated with a low-friction material such as teflon. A lid 303 is pivoted on the wall of the building to swing freely on the wall of the building and to cover the charging port 302 of the dump duct 301 being free to open and close. A sensor 304 is attached to the dump duct 301 to detect the open/close state of the lid 303 on the charging port 302, so that power to the motor is shut down when the lid 303 is open and, when the lid 303 is opened and then closed, the motor is started to grind the garbage and the bag 300 charged through the charging port 302 into the process vessel 1 and mix them with the medium 2. A sprinkler pipe 305 is installed above the charging port 302 of the dump duct 301. The sprinkler pipe 305 has a multitude of sprinkling holes to sprinkle water onto the dump duct 301 under the control of an electromagnetic valve which is installed in the space between the wall and the dump duct 301 but is not shown in the drawing.

Thus the garbage produced in cooking is packed in the bag 300 made of a biodegradable material and after the lid 303 is opened, it is dumped into the process vessel 1 through the charging port 302 via the dump duct 301. Because the dump duct 301 is made of a low-friction material or coated with a low-friction material, the garbage is dumped into the process vessel 1 smoothly, even when it is not packed in the bag 300, without sticking to the inside of the dump duct 301, thus preventing the garbage from rotting in the dump duct 301.

When charging of the garbage is completed, the lid 303 is closed. As the detector switch 304 detects the closing of the lid 303, the motor and the electromagnetic valve, which is not shown in the drawing, operate according to a signal from the detector switch 304, so that the electromagnetic valve opens to sprinkle water through the sprinkler pipe 305 and wash the inside of the dump duct 301. The motor repeats the forward and reverse rotations for a specified period of time to break and grind the bag 300 and the garbage by the mixer screw 11 and mixes them with the medium 2.

As this invention may be embodied in several forms; the present embodiment is therefore illustrative and not restrictive.

## Claims

1. An organic waste disposal method, comprising the steps of:
charging organic waste into a process vessel (1) containing fine wooden pieces (2),
decomposing the charged organic waste by means of aschelminthes and micro-organisms essentially into gases and water, and
purifying the waste liquid left after the decomposition process by means of bacteria.

2. An organic waste disposal method of claim 1, further comprising the steps of:
charging organic waste into a process vessel (1) containing fine wooden pieces (2) and having mixing means (11),
mixing the charged organic waste and the fine wooden pieces (2) by means of said mixing means (11), then decomposing the organic waste by means of aschelminthes and micro-organisms essentially into gases and water, and
purifying the waste liquid left after the decomposition process mainly by means of bacteria.

3. An organic waste disposal system, comprising:
a processing section (3) which contains fine wooden pieces (2), receives organic waste to be disposed of and decomposes the received organic waste by means of aschelminthes and micro-organisms essentially into gases and water,
mixing means (11), installed in said processing section (3), for mixing the fine wooden pieces (2) contained in said processing section (3) and the organic waste, and
a purification section (4) to purify the waste water discharged from said processing section (3).

4. An organic waste disposal system of claim 3, wherein the processing section (3) is comprised in a process vessel (1) and has a mixing means (11) installed therein and a purification section (4) outside of said mixing means (11).

5. An organic waste disposal system of claim 3, further comprising heating means (26), installed in said purification section (4), for heating the fine wooden pieces (2).

6. An organic waste disposal system of claim 3, wherein said mixing means (11) is made of a material having high heat conductivity, and is provided with heating means (21) for heating the fine wooden pieces (2).

7. An organic waste disposal system of claim 3, further comprising:
heating means (75) for heating the space above the fine wooden pieces (2) in said processing section (3) to a temperature above a specified level where the vermin breeding in said processing section (3) and purification section (4).

8. An organic waste disposal system of claim 3, further comprising a water passage installed from said processing section (3) to said purification section (4).

9. An organic waste disposal system of claim 3, further comprising weight detecting means (102) for detecting the weight of said processing section (3) and purification section (4).

10. An organic waste disposal system of claim 9, further comprising:
judging means (110) for judging whether the organic waste disposal process in said processing section (3) and purification (4) is being carried out properly or not, based on the result of detection by said weight detecting means (102), and
display means (111) for displaying the result of judgment by said judging means (110).

11. An organic waste disposal system of claim 9, further comprising:
judging means (110) for judging whether the fine wooden pieces (2) should be replenished or not based on the result of detection by said weight detecting means (102), and
display means (111) for displaying the result of judgment by said judging means (110).

12. An organic waste disposal system of claim 3, further comprising detecting means (103) for detecting the water level in said processing section (3).

13. An organic waste disposal system of claim 3, further comprising overload detecting means (103,107,108) for detecting the overload state in the organic waste decomposition process by an aschelminthes and micro-organisms cultivated in the fine wooden pieces (2).

14. An organic waste disposal system of claim 13, further comprising display means (111) for displaying the result of detection when an overload state is detected by said overload detecting means (103,107,108).

15. An organic waste disposal system of claim 13, further comprising means (110) for inhibiting charging of organic waste into said processing section (3) when an overload state is detected by said overload detecting means (103,107,108).

16. An organic waste disposal system of claim 3, further comprising breaking means (113,123,133,138,139) for breaking a solidification layer of the fine wooden pieces (2) formed in the boundary region between said processing section (3) and said purification section (4).

17. An organic waste disposal system of claim 3, comprising grinding means (207) for grinding organic waste to be disposed of and discharging the ground organic waste.

18. An organic waste disposal method of claim 1 by using the system of claim 17, comprising the steps of:
packing organic waste in a bag (300) made of a biodegradable material which can be decomposed by micro-organisms,
charging said bag (300) into said process vessel containing the fine wooden pieces (2) and having grinding and mixing means (11),
grinding said bag (300) and mixing said bag (300) and the organic waste with the fine wooden pieces (2), and
decomposing said bag (300) by means of micro-organisms when decomposing the organic waste by means of aschelminthes and micro-organisms essentially into gases and water.

## Patentansprüche

1. Verfahren zur Entsorgung organischen Abfalls, mit den folgenden Schritten:
Eingeben von organischem Abfall in einen Prozeßbehälter (1), der feine Holzpartikel (2) enthält,
Abbau des eingegebenen organischen Abfalls im wesentlichen zu Gasen und Wasser mittels Aschelminthen und Mikroorganismen; und
Reinigen der nach dem Abbauprozeß verbleibenden Abfallflüssigkeit mittels Bakterien.

2. Verfahren zur Entsorgung organischen Abfalls nach Anspruch 1, mit den folgenden Schritten:
Eingeben von organischem Abfall in einen Prozeßbehälter (1), der feine Holzpartikel (2) enthält und mit einer Mischeinrichtung (11) versehen ist,
Mischen des eingegebenen organischen Abfalls und der feinen Holzpartikel (2) durch die Mischeinrichtung (11), gefolgt vom Abbauen des organischen Abfalls im wesentlichen zu Gasen und Wasser durch Aschelminthen und Mikroorganismen; und
Reinigen der nach dem Abbauprozeß verbleibenden Abfallflüssigkeit hauptsächlich mittels Bakterien.

3. System zur Entsorgung organischen Abfalls, mit:
einem Verarbeitungsteil (3), der feine Holzpartikel (2) enthält, zu entsorgenden organischen Abfall aufnimmt und den eingegebenen organischen Abfall durch Aschelminthen und Mikroorganismen im wesentlichen zu Gasen und Wasser abbaut,
einer in dem Verarbeitungsteil (3) angeordneten Mischeinrichtung (11) zum Mischen der in dem Verarbeitungsteil (3) enthaltenen feinen Holzpartikel (2) und des organischen Abfalls, und
einem Reinigungsteil (4) zum Reinigen des aus dem Verarbeitungsteil (3) ausgegebenen Abwassers.

4. System zur Entsorgung organischen Abfalls nach Anspruch 3, bei dem der Verarbeitungsteil (3) in einem Prozeßbehälter (1) angeordnet ist und eine Mischeinrichtung (11) enthält, wobei außerhalb der Mischeinrichtung (11) ein Reinigungsteil (4) vorgesehen ist.

5. System zur Entsorgung organischen Abfalls nach Anspruch 3, ferner mit einer in dem Reinigungsteil (4) angeordneten Heizeinrichtung (26) zum Heizen der feinen Holzpartikel (2).

6. System zur Entsorgung organischen Abfalls nach Anspruch 3, bei dem die Mischeinrichtung (11) aus einem Material mit hoher Wärmeleitfähigkeit besteht und mit einer Heizeinrichtung (21) zum Heizen der feinen Holzpartikel (2) versehen ist.

7. System zur Entsorgung organischen Abfalls nach Anspruch 3, ferner mit:
einer Heizeinrichtung (75), um den über den feinen Holzpartikeln (2) befindlichen Raum in dem Verarbeitungsteil (3) auf eine Temperatur zu heizen, die über einem bestimmten Niveau liegt, auf dem sich die Würmer in dem Verarbeitungsteil (3) und dem Reinigungsteil (4) vermehren.

8. System zur Entsorgung organischen Abfalls nach Anspruch 3, ferner mit einem von dem Verarbeitungsteil (3) zu dem Reinigungsteil (4) verlaufenden Wasser-Durchlaß.

9. System zur Entsorgung organischen Abfalls nach Anspruch 3, ferner mit einer Gewichtsdetektionseinrichtung (102) zum Detektieren des Gewichtes des Verarbeitungsteils (3) und des Reinigungsteils (4).

10. System zur Entsorgung organischen Abfalls nach Anspruch 9, ferner mit:
einer Prüfeinrichtung (110), um basierend auf dem Detektionsergebnis der Gewichtsdetektionseinrichtung (102) zu prüfen, ob der Prozeß zur Entsorgung des organischen Abfalls in dem Verarbeitungsteil (3) und dem Reinigungsteil (4) korrekt abläuft oder nicht, und
einer Anzeigeeinrichtung (111) zum Anzeigen des Ergebnisses der von der Prüfeinrichtung (110) durchgeführten Prüfung.

11. System zur Entsorgung organischen Abfalls nach Anspruch 9, ferner mit:
einer Prüfeinrichtung (110), um basierend auf dem Detektionsergebnis der Gewichtsdetektionseinrichtung (102) zu prüfen, ob die feinen Holzpartikel (2) ergänzt werden müssen oder nicht, und
einer Anzeigeeinrichtung (111) zum Anzeigen des Ergebnisses der von der Prüfeinrichtung (110) durchgeführten Prüfung.

12. System zur Entsorgung organischen Abfalls nach Anspruch 3, ferner mit einer Detektionseinrichtung (103) zum Detektieren des Wasserpegeis in dem Verarbeitungsteil (3).

13. System zur Entsorgung organischen Abfalls nach Anspruch 3, ferner mit einer Überlastungsdetektionseinrichtung (103, 107,108) zum Detektieren eines in dem Prozeß zum Abbau organischen Abfalls auftretenden Zustandes der Überlastung mit den in den feinen Holzpartikeln (2) kultivierten Aschelminthen und Mikroorganismen.

14. System zur Entsorgung organischen Abfalls nach Anspruch 13, ferner mit einer Anzeigeeinrichtung (111), die das Detektionsergebnis anzeigt, wenn die Überlastungsdetektionseinrichtung (103,107,108) einen Überlastungszustand detektiert.

15. System zur Entsorgung organischen Abfalls nach Anspruch 13, ferner mit einer Einrichtung, die die Eingabe organischen Abfalls in den Verarbeitungsteil (3) verhindert, wenn die Überlastungsdetektionseinrichtung (103, 107,108) einen Überlastungszustand detektiert.

16. System zur Entsorgung organischen Abfalls nach Anspruch 3, ferner mit einer Brecheinrichtung (113,123,133,138,139) zum Brechen einer in dem Grenzbereich zwischen dem Verarbeitungsteil (3) und dem Reinigungsteil (4) ausgebildeten Verfestigungsschicht der feinen Holzpartikel (2).

17. System zur Entsorgung organischen Abfalls nach Anspruch 3, ferner mit einer Mahleinrichtung (207), die den zu entsorgenden organischen Abfall zermahlt und den zermahlenen organischen Abfall ausgibt.

18. Verfahren zur Entsorgung organischen Abfalls nach Anspruch 1, mit den folgenden Schritten:
Abpacken organischen Abfalls in einen aus biologisch abbaubarem Material bestehenden Beutel (300), der durch Mikroorganismen abgebaut werden kann,
Eingeben des Beutels (300) in den die feinen Holzpartikel (2) enthaltenden und eine Mahleinrichtung sowie eine Mischeinrichtung (11) aufweisenden Prozeßbehälter,
Zermahlen des Beutels (300) und Mischen des Beutels (300) und des organischen Abfalls mit den feinen Holzpartikeln (2), und
Abbauen des Beutels (300) durch Mikroorganismen, wenn der organische Abfall durch Aschelminthen und Mikroorganismen im wesentlichen zu Gasen und Wasser abgebaut wird.

## Revendications

1. Procédé d'élimination de déchets organiques, comprenant les étapes de :
chargement des déchets organiques dans une cuve de traitement (1) contenant des petits morceaux de bois (2),
décomposition des déchets organiques chargés, au moyen d'aschelminthes et de micro-organismes, essentiellement en gaz et en eau, et
purification du liquide de rejet qui reste après le processus de décomposition, au moyen de bactéries.

2. Procédé d'élimination de déchets organiques suivant la revendication 1, comprenant en outre les étapes de :
chargement des déchets organiques dans une cuve de traitement (1) contenant des petits morceaux de bois (2) et comportant des moyens de mélange (11),
mélange des déchets organiques chargés et des petits morceaux de bois (2) à l'aide des dits moyens de mélange (11), puis décomposition des déchets organiques au moyen d'aschelminthes et de micro-organismes, sensiblement en gaz et en eau, et
purification du liquide de rejet qui reste après le processus de décomposition, principalement au moyen de bactéries.

3. Dispositif d'élimination de déchets organique, comprenant :
une section de traitement (3) qui contient des petits morceaux de bois (2), reçoit les déchets organiques à éliminer et décompose les déchets organiques reçus au moyen d'aschelminthes et de micro-organismes, essentiellement en gaz et en eau,
des moyens de mélange (11),installés dans ladite section de traitement (3), pour mélanger les petits morceaux de bois (2) contenus dans ladite section de traitement (3) et les déchets organiques, et
une section de purification (4) pour purifier l'eau de rejet sortant de ladite section de traitement (3).

4. Dispositif d'élimination de déchets organiques suivant la revendication 3, dans lequel la section de traitement (3) est comprise dans une cuve de traitement (1) et comporte des moyens de mélange (11) installés à l'intérieur et une section de purification (4) à l'exté-. rieur desdits moyens de mélange (11).

5. Dispositif d'élimination de déchets organiques suivant la revendication 3, comprenant en outre des moyens de chauffage (26), installés dans ladite section de purification (4), pour chauffer les petits morceaux de bois (2).

6. Dispositif d'élimination de déchets organiques suivant la revendication 3, dans lequel lesdits moyens de mélange (11) sont construits en une matière ayant une conductivité thermique élevée, et ils comportent des moyens de chauffage (21) pour chauffer les petits morceaux de bois (2).

7. Dispositif d'élimination de déchets organiques suivant la revendication 3, comprenant en outre :
des moyens de chauffage (75) pour chauffer l'espace situé au-dessus des petits morceaux de bois (2) dans ladite section de traitement (3) à une température supérieure à une valeur spécifiée à laquelle les organismes pathogènes se reproduisent dans ladite section de traitement (3) et ladite section de purification (4).

8. Dispositif d'élimination de déchets organiques suivant la revendication 3, comprenant en outre un passage d'eau allant de ladite section de traitement (3) à ladite section de purification (4).

9. Dispositif d'élimination de déchets organiques suivant la revendication 3, comprenant en outre des moyens de détection de poids (102) pour détecter le poids de ladite section de traitement (3) et de ladite section de purification (4).

10. Dispositif d'élimination de déchets organiques suivant la revendication 9, comprenant en outre :
des moyens de jugement (110) pour juger si le processus d'élimination des déchets organiques dans la diate section de traitement (3) et ladite section de purification (4) est effectué correctement ou non, sur la base du résultat de détection par lesdits moyens de détection de poids (102), et
des moyens d'affichage (111) pour afficher le résultat du jugement par lesdits moyens de jugement (110).

11. Dispositif d'élimination de déchets organiques suivant la revendication 9, comprenant en outre :
des moyens de jugement (110) pour juger si les petits morceaux de bois (2) doivent être complétés ou non, sur la base du résultat de détection par lesdits moyens de détection de poids (102), et
des moyens d'affichage (111) pour afficher le résultat du jugement par lesdits moyens de jugement (110).

12. Dispositif d'élimination de déchets organiques suivant la revendication 3, comprenant en outre des moyens de détection(103) pour détecter le niveau d'eau dans ladite section de traitement (3).

13. Dispositif d'élimination de déchets organiques suivant la revendication 3, comprenant en outre des moyens de détection de surcharge (103,107,108) pour détecter l'état de surcharge dans le processus de décomposition des déchets organiques par des aschelminthes et des micro-organismes cultivés dans les petits morceaux de bois (2).

14. Dispositif d'élimination de déchets organiques suivant la revendication 13, comprenant en outre des moyens d'affichage (111) pour afficher le résultat de détection lorsqu'un état de surcharge est détecté par les dits moyens de détection de surcharge (103,107,108).

15. Dispositif d'élimination de déchets organiques suivant la revendication 13, comprenant en outre des moyens (110) pour empêcher le chargement de déchets organiques dans ladite section de traitement (3) lorsqu'un état de surcharge est détecté par lesdits moyens de détection de surcharge (103,107,108).

16. Dispositif d'élimination de déchets organiques suivant la revendication 3, comprenant en outre des moyens de cassure (113,123,133,138,139) pour briser une couche de solidification des petits morceaux de bois (2) formée dans la région limite entre ladite section de traitement (3) et ladite section de purification (4).

17. Dispositif d'élimination de déchets organiques suivant la revendication 3, comprenant des moyens de broyage (207) pour broyer les déchets organiques à éliminer et pour distribuer les déchets organiques broyés.

18. Procédé d'élimination de déchets organiques suivant la revendication 1 par utilisation du dispositif de la revendication 17, comprenant les étapes de :
emballage des déchets organiques dans un sac (300) en matière biodégradable qui peut être décomposée par les micro-organismes,
chargement dudit sac (300) dans ladite cuve de traitement contenant les petits morceaux de bois (2) et comportant des moyens de broyage et de mélange (11),
broyage dudit sac (300) et mélange dudit sac (300) et des déchets organiques avec les petits morceaux de bois (2), et
décomposition dudit sac (300) au moyen des micro-organismes pendant la décomposition des déchets organiques au moyen d'aschelminthes et de micro-organismes,essentiellement en gaz et en eau.
